(19) Europäisches Patentamt
European Patent Office
Office européen des brevets

(11) **EP 4 669 008 A1**

(12) **EUROPEAN PATENT APPLICATION**
published in accordance with Art. 153(4) EPC

(43) Date of publication:
**24.12.2025   Bulletin 2025/52**

(21) Application number: **23921723.5**

(22) Date of filing: **14.02.2023**

(51) International Patent Classification (IPC):
**H04W 74/08** (2024.01)

(52) Cooperative Patent Classification (CPC):
**H04W 74/08**

(86) International application number:
**PCT/CN2023/076030**

(87) International publication number:
**WO 2024/168555 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **JIA, Meiyi**
  **Beijing 100022 (CN)**
• **YI, Su**
  **Beijing 100022 (CN)**
• **WANG, Xin**
  **Beijing 100022 (CN)**

(74) Representative: **Haseltine Lake Kempner LLP**
**Cheapside House**
**138 Cheapside**
**London EC2V 6BJ (GB)**

(54) **RANDOM ACCESS METHOD AND DEVICE**

(57)     Embodiments of this disclosure provide a random access method and apparatus. The method includes: when a terminal equipment transmits a random access preamble on a candidate cell, and/or when the terminal equipment receives a PDCCH transmission in a search space or a control resource set (coreset) related to the candidate cell, determining that a random access procedure on the candidate cell is completed; or, when the terminal equipment receives a random access response, determining that a random access procedure on the candidate cell is completed.

701
When a terminal equipment transmits a random access preamble on a candidate cell, and/or when the terminal equipment receives a PDCCH transmission in a search space or a control resource set (coreset) related to the candidate cell, determining that a random access procedure on the candidate cell is completed

702
When the terminal equipment receives a random access response, determining that a random access procedure on the candidate cell is completed

703
Switching an active uplink BWP by the terminal equipment to an uplink BWP of a serving cell before performing a random access procedure on the candidate cell or an initial BWP of the serving cell when the random access procedure is completed or within a preset time after the random access procedure is completed.

**FIG. 7**

**Description**

Technical Field

This disclosure relates to the field of communication technologies.

Background

There are two types of random access procedures: 4-step random access (4-step RA) using MSG 1 and 2-step random access (2-step RA) using MSGA. Both random access procedures support contention-based random access (CBRA) and contention-free random access (CFRA).

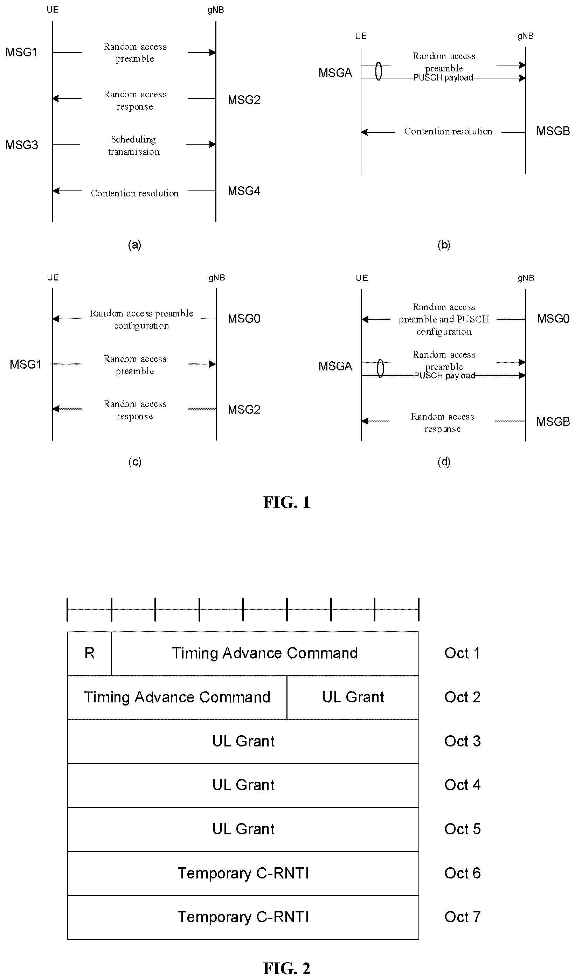

FIG. 1 is a schematic diagram of information exchange between 4-step random access and 2-step random access.

MSG 1 of the 4-step RA type includes a preamble on a PRACH (physical random access channel). After MSG 1 transmission, a UE monitors a response from a network in a configured window.

For CFRA, the network allocates a dedicated preamble for MSG 1 transmission, and upon receipt of a random access response from the network, the UE terminates the random access procedure (as shown in (c) of FIG. 1).

For CBRA, when a random access response is received, the UE uses a scheduled UL grant in the response to transmit MSG 3, and monitors contention resolution (as shown in (a) of FIG. 1); if the contention resolution is not successful after MSG 3 transmission/retransmission, the UE turns back to MSG 1 transmission.

MSGA of the 2-step RA type includes a preamble on a PRACH and a payload on a PUSCH. After MSGA transmission, the UE monitors a response from the network in a configured window.

For CFRA, a dedicated preamble and a PUSCH resource for MSGA transmission are configured, and once a response is received from the network, the UE terminates the random access procedure (as shown in (d) of FIG. 1).

For CBFA, if the contention resolution is successful when a response is received from the network, the UE terminates the random access procedure (as shown in (b) of FIG. 1).

When carrier aggregation (CA) is configured, for random access of 2-step RA type, random access is performed only on a primary cell (PCell), while contention resolution may be cross-scheduled by the PCell.

When CA is configured, for a random access procedure of 4-step RA type, former three steps of CBRA always occur in the PCell, and contention resolution may be cross-scheduled by the PCell. Beginning three steps of CFRA on the PCell are all on the PCell. CFRA on a secondary cell (SCell) is initiated only by a gNB, so as to establish secondary TAG timing advance: this process is initiated by the gNB with a PDCCH order (step 0) transmitted on a scheduling cell of an active SCell of a secondary TAG, wherein preamble transmission (step 1) occurs on the indicated SCell, and random access correspondingly (step 2) occurs on the PCell.

The gNB provides TA to the UE via a random access response (RAR) or an MAC payload of MSGB.

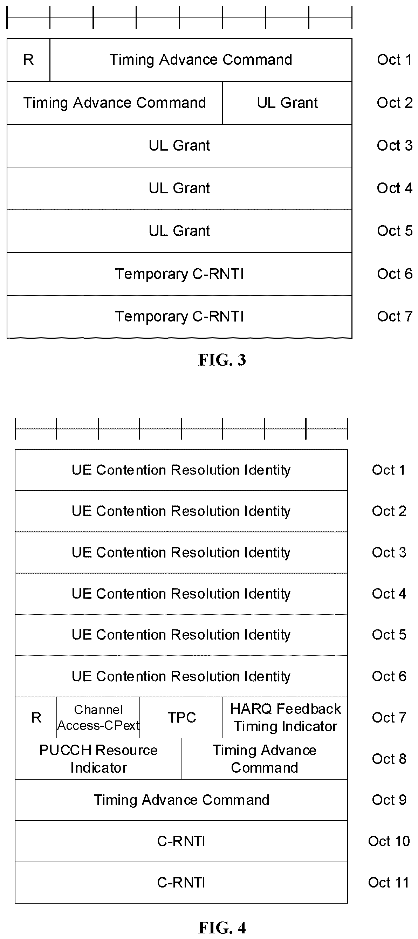

FIG. 2 is a schematic diagram of an MAC RAR, FIG. 3 is a schematic diagram of fallbackRAR of an MAC payload of MSGB, and FIG. 4 is a schematic diagram of successRAR of the MAC payload of MSGB.

As shown in FIG. 2, the MAC RAR is an RAR in the 4-step RA type, which indicates TA via 12 bits. As shown in FIG. 3, the fallbackRAR is applicable to a case where the network in the 2-step RA type only receives a preamble but does not receive a payload, which indicates TA via 12 bits. And as shown in FIG. 4, successRAR is applicable to a case of contention resolution in the 2-step RA type, and indicates TA via 12 bits.

When a terminal equipment moves from coverage area of a cell to coverage area of another cell, serving cell change needs to be performed at a certain point. Currently, serving cell changes are triggered by layer 3 (L3) measurement and completed by RRC signaling, and reconfiguration with sync triggered for a PCell change and a primary secondary cell (PSCell) change and SCells release, where applicable, are increased. All cases involve a complete layer 1, i.e. layer 1 (and layer 2, L2) reset, thereby resulting in longer delays, higher overhead and longer interruption times than beam switching mobility. An objective of L1/L2 mobility enhancement is to ensure serving cell changes via L1/L2 signaling for lower delay, overhead and interruption times.

For lower mobility delay, a mechanism and process of inter-cell mobility based on L1/L2 include:

configuration and maintenance of multiple candidate cells to allow rapid application of configuration of candidate cells;
for possibly applicable scenarios, a dynamic handover mechanism between candidate serving cells (including special cells and secondary cells) based on L1/L2 signaling;
L1 enhancement of inter-cell beam management, including L1 measurement and reporting, as well as beam indications;
timing advance management; and
CU-DU interface signaling to support L1/L2 mobility.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

Timing advance management is a part of a mechanism and process for achieving L1/L2 inter-cell mobility. It has been agreed to support the acquisition of timing advance (TA) of candidate cells before receiving a cell switch command in a layer 1/layer 2 triggered mobility (LTM) procedure. A mechanism for acquiring TA of a candidate cell is a PDCCH ordered RACH. TA update of the candidate cell, i.e. re-acquisition of TA, may be triggered by a network, and a triggering mechanism identical to that for acquiring initial TA is reused, that is, random access triggered by a PDCCH order on the candidate cell.
The PDCCH ordered RACH acquires the TA of the LTM candidate cell, wherein the PDCCH order is triggered only by a source cell, and an indication of the candidate cell and/or a PRACH occasion of the candidate cell is/are introduced into DCI thereof. RACH resource configuration of the candidate cell is provided before the PDCCH order.
It was found by the inventors that for a random access procedure on a candidate cell, for example, the PDCCH ordered RACH may include or may not include transmission of RARs, and completion of the random access procedure in the existing mechanism may not be applicable to a random access procedure on a candidate cell that does not include transmission of RARs. If completion of the random access procedure is not determined, a terminal may always performs the random access procedure on the candidate cell, which will affect transmission on a serving cell.
In order to solve one or more of the above problems, embodiments of this disclosure provide a random access method and apparatus.
According to a first aspect of the embodiments of this disclosure, there is provided a random access apparatus, the apparatus including: a first determining unit configured to, when a terminal equipment transmits a random access preamble on a candidate cell, and/or when the terminal equipment receives a PDCCH transmission in a search space or a control resource set (coreset) related to the candidate cell, determine that a random access procedure on the candidate cell is completed; or a second determining unit configured to, when the terminal equipment receives a random access response, determine that a random access procedure on the candidate cell is completed.
According to a second aspect of the embodiments of this disclosure, there is provided a random access apparatus, the apparatus including: a first receiving unit configured to receive a random access preamble transmitted by a terminal equipment on a candidate cell; and/or, a second transmitting unit configured to transmit a PDCCH transmission in a search space or a control resource set (coreset) related to the candidate cell to a terminal equipment; and/or, a third transmitting unit configured to transmit a random access response related to the candidate cell to the terminal equipment.
According to a third aspect of the embodiments of this disclosure, there is provided a random access apparatus, the apparatus including: a fourth transmitting unit configured to transmit a random access response (RAR) related to a candidate cell to a terminal equipment.
According to a fourth aspect of the embodiments of this disclosure, there is provided a terminal equipment, the terminal equipment including the apparatus as described in the embodiment of the first aspect of this disclosure.
According to a fifth aspect of the embodiments of this disclosure, there is provided a network device, the network device including the apparatus as described in the embodiment of the second or third aspect of this disclosure.
According to a sixth aspect of the embodiments of this disclosure, there is provided a communication system, the communication system including the network device as described in the embodiment of the fifth aspect of this disclosure and the terminal equipment as described in the embodiment of the fourth aspect of this disclosure
According to a seven aspect of the embodiments of this disclosure, there is provided a random access method, the method including: when a terminal equipment transmits a random access preamble on a candidate cell, and/or when the terminal equipment receives a PDCCH transmission in a search space or a control resource set (coreset) related to the candidate cell, determining that a random access procedure on the candidate cell is completed; or, when the terminal equipment receives a random access response, determining that a random access procedure on the candidate cell is completed.
According to an eighth aspect of the embodiments of this disclosure, there is provided a random access method, the method including: receiving, by a network device, a random access preamble transmitted by a terminal equipment on a candidate cell; and/or, transmitting a PDCCH transmission in a search space or a control resource set (coreset) related to the candidate cell by the network device to the terminal equipment; and/or, transmitting a random access response related to the candidate cell by the network device to the terminal equipment.
According to a ninth aspect of the embodiments of this disclosure, there is provided a random access method, the method including: transmitting a random access response (RAR) related to a candidate cell by a network device to a terminal equipment.
According to a tenth aspect of the embodiments of this disclosure, there is provided a computer readable program code, which, when executed in a random access apparatus or a terminal equipment, will cause the random access apparatus or the terminal equipment to carry out the random access method as described in the embodiment of the seventh aspect of the embodiments of this disclosure.

According to an eleventh aspect of the embodiments of this disclosure, there is provided a computer readable medium, including a computer readable program code, which will cause a random access apparatus or a terminal equipment to carry out the random access method as described in the embodiment of the seventh aspect of the embodiments of this disclosure.

According to a twelfth aspect of the embodiments of this disclosure, there is provided a computer readable program, which, when executed in a random access apparatus or a network device, will cause the random access apparatus or the network device to carry out the random access method as described in the embodiment of the eighth or ninth aspect of the embodiments of this disclosure.

According to a thirteenth aspect of the embodiments of this disclosure, there is provided a computer readable medium, including a computer readable program, which will cause a random access apparatus or a network device to carry out the random access method as described in the embodiment of the eighth or ninth aspect of the embodiments of this disclosure.

An advantage of the embodiments of this disclosure exists in that:

when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell;
and furthermore, the network device is able to provide a TA value of the candidate cell to the terminal equipment via an RAR.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of information exchange between 4-step random access and 2-step random access;
FIG. 2 is a schematic diagram of an MAC RAR;
FIG. 3 is a schematic diagram of fallbackRAR of an MAC payload of an MSGB;
FIG. 4 is a schematic diagram of successRAR of the MAC payload of the MSGB;

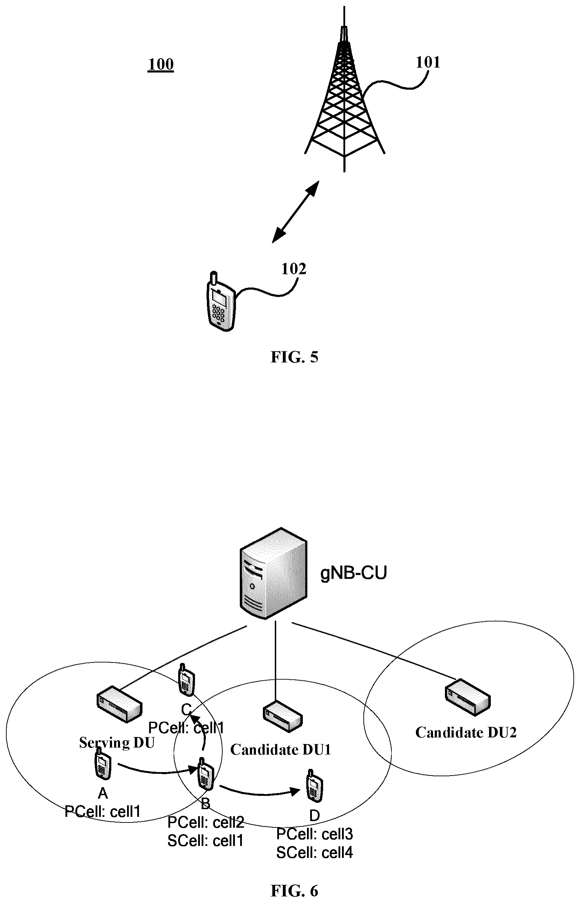

FIG. 5 is a schematic diagram of a communication system of an embodiment of this disclosure;
FIG. 6 is a schematic diagram of scenarios of L1/L2-based inter-cell mobility;

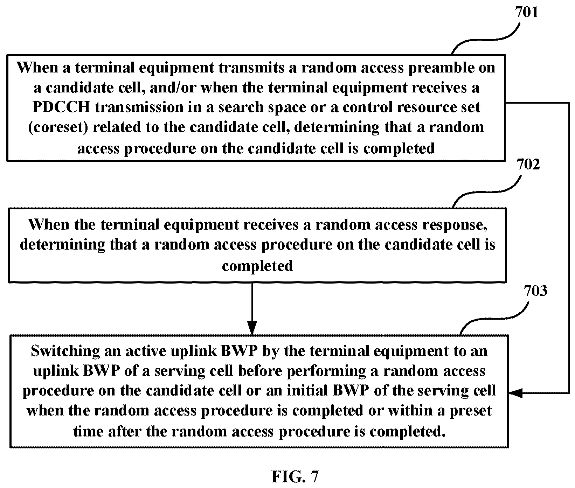

FIG. 7 is a schematic diagram of the random access method of embodiment 1 of this disclosure;

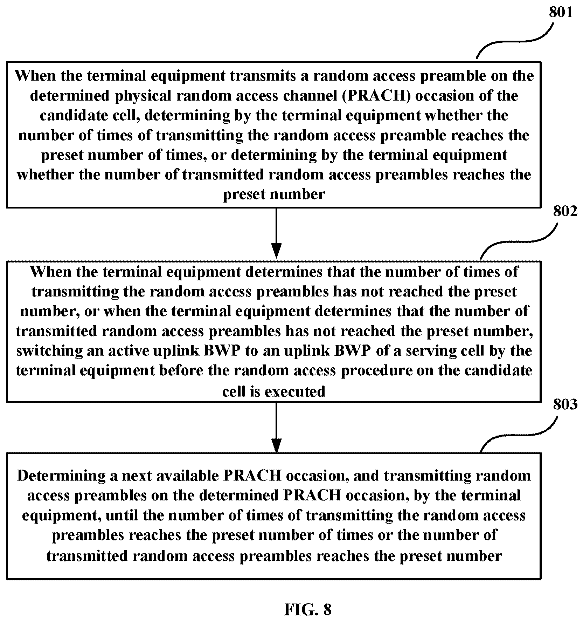

FIG. 8 is another schematic diagram of the random access method of embodiment 1 of this disclosure;

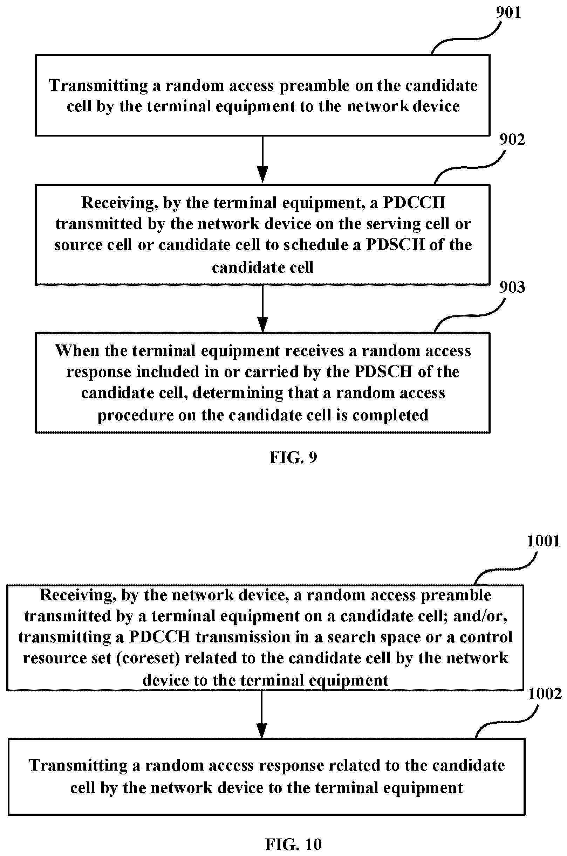

FIG. 9 is a further schematic diagram of the random access method of embodiment 1 of this disclosure;
FIG. 10 is a schematic diagram of the random access method of embodiment 2 of this disclosure;

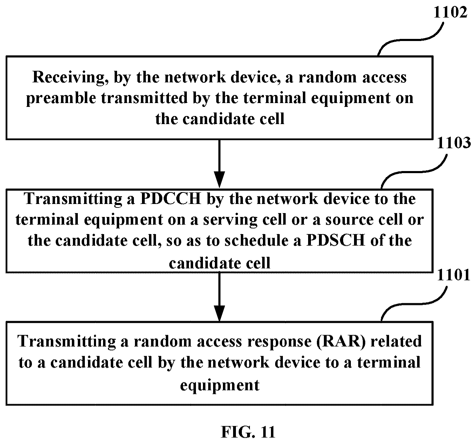

FIG. 11 is a schematic diagram of the random access method of embodiment 3 of this disclosure;

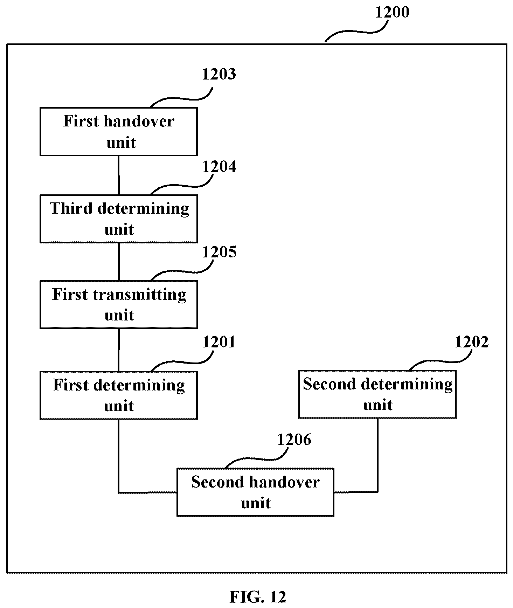

FIG. 12 is a schematic diagram of the random access apparatus of embodiment 4 of this disclosure;

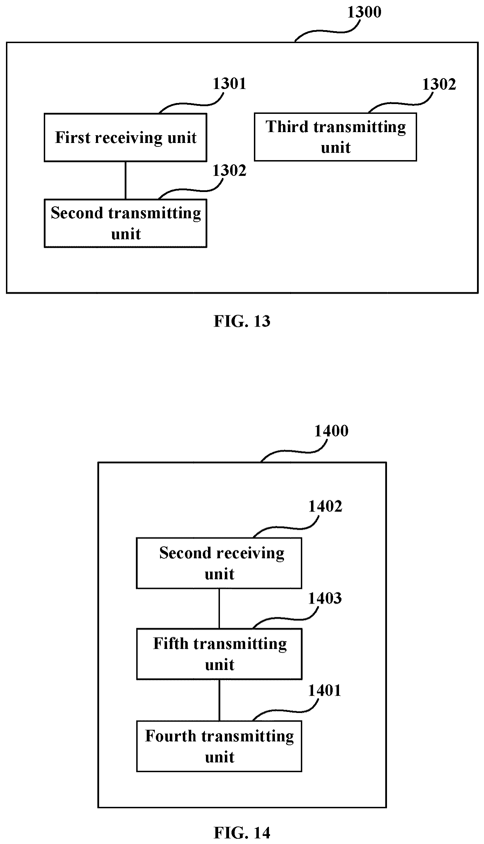

FIG. 13 is a schematic diagram of the random access apparatus of embodiment 5 of this disclosure;

FIG. 14 is a schematic diagram of the random access apparatus of embodiment 6 of this disclosure;

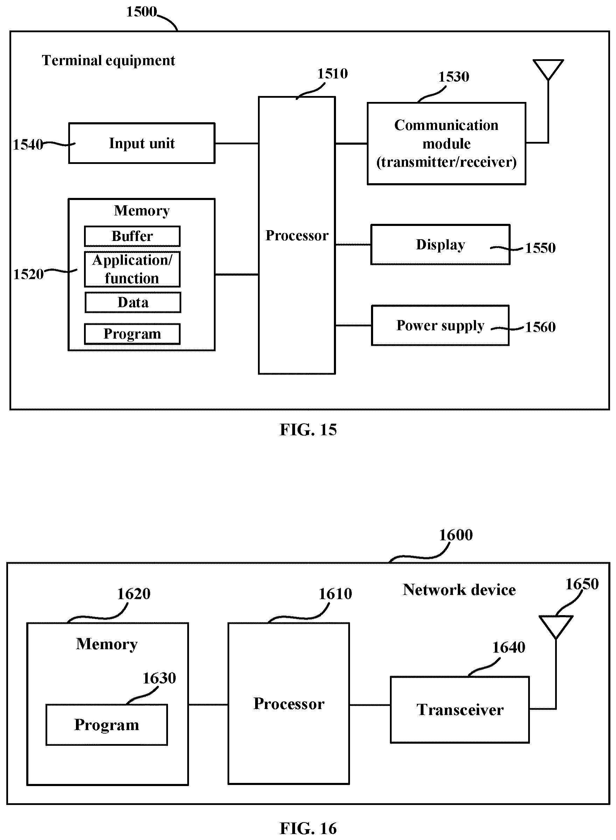

FIG. 15 is a block diagram of a systematic structure of the terminal equipment of embodiment 7 of this disclosure; and

FIG. 16 is a block diagram of a systematic structure of the network device of embodiment 8 of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), high-speed packet access (HSPA), and new radio (NR), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DUs are a logical node of the gNB having a part of functions of the gNB. The term "cell" may refer to a base station and/or its coverage area, depending on a context of the term. A gNB-DU supports one or more cells, and one cell is supported by only one gNB-DU.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), or an access terminal (AT), etc., such as a terminal equipment served by an IAB-node or IAB-donor under an IAB architecture.

Wherein, the terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if" all indicate being based on one or more conditions or states, and in addition, these expressions are interchangeable.

Scenarios of the embodiments of this disclosure shall be described below by way of examples; however, this disclosure is not limited thereto.

FIG. 5 is a schematic diagram of a communication system of an embodiment of this disclosure, in which a case where a terminal equipment and a network device are taken as examples is schematically shown. As shown in FIG. 5, a communication system 100 may include a network device 101 and a terminal equipment 102. For the sake of simplicity, an example having only one terminal equipment is schematically given in FIG. 5; however, a case where there are multiple terminal equipments may also be included.

In the embodiment of this disclosure, existing traffics or traffics that may be implemented in the future may be performed between the network device 101 and the terminal equipment 102. For example, such traffics may include but not limited to enhanced mobile broadband (eMBB), massive machine type communication (mMTC), and ultra-reliable and low-latency communication (URLLC), etc.

FIG. 6 is a schematic diagram of scenarios of L1/L2-based inter-cell mobility.

When a terminal equipment moves from coverage area of a cell to coverage area of another cell, L1/L2 triggered serving cell change needs to be performed at a certain point. The scenarios of L1/L2-based inter-cell mobility include:

scenarios of inter-DU and intra-DU: designs of intra-DU and inter-DU based on L1/L2 mobility should share as much commonality as possible under reasonable circumstances;
switch, i.e. mobility/change of a PCell, which involves non-CA (i.e. PCell only) and a CA scenario (i.e. PCell and SCell(s)), which includes that:

a target PCell/target SCell(s) is/are not a current serving cell(s) (that is, a CA ->CA scenario with a PCell change), such as the LTM from terminal B to terminal D in FIG. 6;
a target SCell is a current PCell, such as the LTM from terminal A to terminal B in FIG. 6; and
a target PCell is a current SCell, such as the LTM of terminal B to terminal C in FIG. 6;

a CA scenario supports a PCell change with no SCell change and a PCell change with a SCell change;
an NR-DC scenario is supported, at least for a PSCell change not involving MN, that is, intra-SN; and
an inter-frequency scenario (including mobility to an inter-frequency cell of a non-current serving cell) is supported basically, and if feasible, inter-frequency LI measurement is supported.

In the embodiment of this disclosure, a source cell and a target cell may be synchronous or asynchronous, and may operate on FR1 and FR2.

In the embodiment of this disclosure, L1 refers to layer 1, such as including a physical layer;

L2 refers to layer 2, which includes, for example, an MAC layer or an MAC sublayer, a PCCP layer or a PCCP sublayer, and an RLC layer or an RLC sublayer;
and L3 refers to layer 3, such as including an RRC Layer.

Implementations of the embodiments of this disclosure shall be described below with reference to the accompanying drawings; however, these implementations are illustrative only, and are not intended to limit this disclosure.

Embodiment 1

The embodiment of the first aspect provides a random access method, applicable to a terminal equipment, such as the terminal equipment 102 in FIG. 5 or the terminal equipment in FIG. 6.

FIG. 7 is a schematic diagram of the random access method of embodiment 1 of this disclosure. As shown in FIG. 7, the method includes:

step 701: when a terminal equipment transmits a random access preamble on a candidate cell, and/or when the terminal equipment receives a PDCCH transmission in a search space or a control resource set (coreset) related to the candidate cell, determining that a random access procedure on the candidate cell is completed; or,
step 702: when the terminal equipment receives a random access response, determining that a random access procedure on the candidate cell is completed.

Hence, the terminal equipment is able to determine that a random access procedure on the candidate cell is completed, thereby avoiding effects on transmissions on the serving cell.

In the embodiments of this disclosure, the candidate cell may be replaced with a target candidate cell or a candidate configuration.

In step 701, when the terminal equipment transmits the random access preamble on the candidate cell, it is determined that the random access procedure on the candidate cell is completed; or,

when the terminal equipment receives the PDCCH transmission in the search space or the control resource set (coreset) related to the candidate cell, it is determined that the random access procedure on the candidate cell is completed; or,

when the terminal equipment transmits the random access preamble on the candidate cell and the terminal equipment receives the PDCCH transmission in the search space or the control resource set (coreset) related to the candidate cell, it is determined that the random access procedure on the candidate cell is completed.

In the embodiments of this disclosure, in step 701, when that the terminal equipment transmits the random access preamble on the candidate cell, it is determined that the random access procedure on the candidate cell is completed, includes that: when the terminal equipment transmits one or one time of random access preamble on the candidate cell, it is determined that the random access procedure on the candidate cell is completed.

In the embodiments of this disclosure, that when the terminal equipment transmits one or one time of random access preamble on the candidate cell, it is determined that the random access procedure on the candidate cell is completed, includes that: when the terminal equipment transmits one time of random access preamble on a determined physical random access channel (PRACH) of the candidate cell, it is determined that the random access procedure on the candidate cell is completed.

In the embodiments of this disclosure, in step 701, that when the terminal equipment transmits a random access preamble on the candidate cell, it is determined that the random access procedure on the candidate cell is completed, includes that: when the terminal equipment transmits random access preambles for a preset number of time or a preset number of random access preambles on the candidate cell, it is determined that the random access procedure on the candidate cell is completed, wherein the preset number of times is greater than 1, and the preset number is greater than or equal to 1.

In the embodiments of this disclosure, when the preset number is 1, that is, the terminal equipment transmits one random access preamble on the candidate cell, it may that, the terminal equipment transmits a random access preamble for one time, or, the terminal equipment transmits random access preambles for multiple times and random access preambles transmitted each time are identical.

In the embodiments of this disclosure, a counter may be used to count the number of times or the number of random access preambles transmitted by the terminal equipment on the candidate cell.

For example, the counter is *PREAMBLE_TRANSMISSION_COUNTER.* The terminal equipment counts the number of times of random access preambles transmitted by the terminal equipment on a candidate cell by using the counter *PREAMBLE_TRANSMISSION_COUNTER.*

For example, the counter *PREAMBLE_TRANSMISSION_COUNTER* is configured per candidate cell.

For example, the terminal equipment counts the number of random access preambles transmitted on a candidate cell by using a first counter. If the terminal equipment transmits a random access preamble on the candidate cell, the first counter does not reach a preset value and the transmitted preamble is different from those transmitted previously, the first counter is increased by 1.

For example, the first counter is configured per candidate cell.

In the embodiments of this disclosure, that when the terminal equipment transmits random access preambles for a preset number of time or a preset number of random access preambles on the candidate cell, it is determined that the random access procedure on the candidate cell is completed, includes that:

when the terminal equipment transmits a random access preamble on a determined physical random access channel (PRACH) occasion of the candidate cell, the terminal equipment determines whether the number of times of transmitting the random access preamble reaches the preset number of times, or the terminal equipment determines whether the number of the random access preamble reaches the preset number.

In the embodiments of this disclosure, for the case where it is determined that the random access procedure on the candidate cell is completed when the terminal equipment transmits random access preambles for a preset number of time or a preset number of random access preambles on the candidate cell, FIG. 8 is another schematic diagram of the random access method of embodiment 1 of this disclosure. As shown in FIG. 8, the method includes:

step 801: when the terminal equipment transmits a random access preamble on the determined physical random access channel (PRACH) occasion of the candidate cell, determining by the terminal equipment whether the number of times of transmitting the random access preamble reaches the preset number of times, or determining by the terminal equipment whether the number of transmitted random access preambles reaches the preset number;

step 802: when the terminal equipment determines that the number of times of transmitting the random access preambles has not reached the preset number, or when the terminal equipment determines that the number of transmitted random access preambles has not reached the preset number, switching an active uplink BWP to an uplink BWP of a serving cell by the terminal equipment before the random access procedure on the candidate cell is executed;

for example, the terminal equipment switches the active uplink BWP to the uplink BWP of the serving cell before the random access procedure on the candidate cell is executed, so as perform service transmission on the serving cell;

step 803: determining a next available PRACH occasion, and transmitting random access preambles on the determined PRACH occasion, by the terminal equipment, until the number of times of transmitting the random access preambles reaches the preset number of times or the number of transmitted random access preambles reaches the preset number.

That is, if the number of times of transmitting the random access preambles does not reach the preset number of times or the number of transmitted random access preambles does not reach the preset number, steps 802 and 803 are repeated, until the number of times of transmitting the random access preambles reaches the preset number of times or the number of transmitted random access preambles reaches the preset number.

In the embodiments of this disclosure, a possible order of execution of steps in FIG. 8 is step 803->step 801->step 802, that is, the terminal equipment determines the next available PRACH occasion, and transmits the random access preamble on the determined PRACH occasion; when the terminal equipment transmits a random access preamble on the determined physical random access channel (PRACH) occasion of the candidate cell, the terminal equipment determines whether the number of times of transmitting the random access preamble reaches the preset number of times, or, the terminal equipment determines whether the number of transmitted random access preambles reaches the preset number; and when the terminal equipment determines that the number of times of transmitting the random access preamble has not reached the preset number of times, or when the terminal equipment determines that the number of transmitted random access preambles has not reached the preset number, the terminal equipment switches the active uplink BWP to the uplink BWP of the serving cell before the random access procedure on the candidate cell is executed.

In the embodiments of this disclosure, the random access preamble transmitted on the determined PRACH occasion is identical to the preamble transmitted last time, such as the random access procedure triggered by a PDCCH order;

or, the random access preamble transmitted on the determined PRACH occasion is different from the preamble transmitted last time, such as a random access procedure initiated by the terminal equipment.

In the embodiments of this disclosure, the preset number of times is a parameter configured or indicated by the network, and/or the preset number is a parameter configured or indicated by the network.

In the embodiments of this disclosure, in step 803, power ramping is suspended, or, whether to perform or suspend power ramping is determined based on network configuration (such as being configured by an RRC message) or indication (such as indicated by the PDCCH order).

In the embodiments of this disclosure, an RAR window is not started or is not configured. When the terminal equipment determines that the number of times of transmitting the random access preambles has not reached the preset number of times, or when the terminal equipment determines that the number of transmitted random access preambles has not reached the preset number, the terminal equipment does not start the RAR window and does not need to wait for expiration of the RAR window. The terminal equipment determines the next available PRACH occasion, and transmits the random access preambles on the determined PRACH occasion.

A specific implementation of determining that the random access procedure is completed according to that the terminal equipment transmits the random access preambles on the candidate cell shall be described below by way of examples.

Example 1: for a case where the terminal equipment transmits the random access preamble once on the candidate cell.

When the terminal equipment transmits the random access preamble once on the candidate cell, the terminal equipment deems that the random access procedure on the candidate cell is completed, including that:

the terminal equipment determines a next available PRACH occasion corresponding to a selected DL RS, and performs the random access preamble transmission procedure; and the terminal equipment deems that the random access procedure on the candidate cell is completed.

For example, the random access preamble transmission procedure includes:

selecting a value of *DELTA _PREAMBLE;*
setting *PREAMBLE_RECEIVED_TARGET_POWER,* such as setting to *preambleReceivedTargetPower + DELTA _PREAMBLE + POWER_OFFSET_2STEP_RA*;
instructing a physical layer to transmit the random access preambles by using the selected PRACH occasion, *PREAMBLE_INDEX* and *PREAMBLE_RECEIVED_TARGET_POWER.*

Optionally, if an LBT failure indication of the random access preamble transmission is received from a lower layer, the terminal equipment deems that the random access procedure on the candidate cell has not been completed successfully; otherwise, the terminal equipment deems that the random access procedure on the candidate cell has been successfully completed.

Example 2: for a case where the terminal equipment transmits the random access preamble for multiple times on the candidate cell.

Example 2.1: for a case where power ramping does not exist (is suspended).

When the terminal equipment transmits the random access preamble for N times on the candidate cell, the terminal equipment deems that the random access procedure on the candidate cell is completed, including that:
the terminal equipment determines a next available PRACH occasion corresponding to the selected DL RS, and performs the random access preamble transmission procedure.

For example, the random access preamble transmission procedure includes:

> selecting a value of *DELTA _PREAMBLE;*
> setting *PREAMBLE_RECEIVED_TARGET_POWER,* such as setting to *preambleReceivedTargetPower + DELTA_PREAMBLE + POWER_OFFSET_2STEP_RA*;
> instructing a physical layer to transmit the random access preambles by using the selected PRACH occasion, *PREAMBLE_INDEX* and *PREAMBLE_RECEIVED_TARGET_POWER.*

If an LBT failure indication of the random access preamble transmission is received from the lower layer,

> if lbt-FailureRecoveryConfig is configured, the terminal equipment executes a random access resource selection procedure;
> otherwise, the terminal equipment deems that the random access preamble has been transmitted once on the candidate cell and/or calculates a counter of the number of times of transmission of the random access preamble on the candidate cell, such as increasing *PREAMBLE_ TRANSMISSION_COUNTER* by 1;
> if the terminal equipment transmits the random access preamble for N times on the candidate cell or the counter reaches the preset value N, the terminal equipment deems that the random access procedure on the candidate cell is completed;
> otherwise, or if the random access procedure is not completed, the terminal equipment executes the random access resource selection procedure.

Example 2.2: for the case where power ramping exists (is performed)

When the terminal equipment transmits the random access preamble for N times on the candidate cell, the terminal equipment deems that the random access procedure on the candidate cell is completed, including that:
the terminal equipment determines the next available PRACH occasion corresponding to the selected DL RS, and performs the random access preamble transmission procedure.

For example, the random access preamble transmission procedure includes:

> if a random access preamble is transmitted on the candidate cell or a counter of the number of times of transmission of the random access preamble on the candidate cell is calculated, for example, *PREAMBLE_TRANSMISSION_COUNTER* is greater than 1, and if no notification for suspending a power ramping counter from the lower layer is received, no LBT failure indication for last time of random access preamble transmission is received from the lower layer, and if a selected SSB or CSI-RS does not change from that selected in the last random access preamble transmission, increasing *PREAMBLE_POWER_RAMPING_COUNTER* by 1;
> selecting a value of *DELTA _PREAMBLE;*
> setting *PREAMBLE_RECEIVED_TARGET_POWER,* such as setting to *preambleReceivedTargetPower + DELTA_PREAMBLE + (PREAMBLE_POWER_RAMPING_COUNTER - 1) $\times$ PREAMBLE_POWER_RAMPING_STEP + POWER_OFFSET_2STEP_RA;*
> instructing a physical layer to transmit the random access preambles by using the selected PRACH occasion, PREAMBLE_INDEX and PREAMBLE_RECEIVED_TARGET_POWER.

If an LBT failure indication of the random access preamble transmission is received from the lower layer,

> if lbt-FailureRecoveryConfig is configured, the terminal equipment executes a random access resource selection procedure;
> otherwise, the terminal equipment deems that the random access preamble has been transmitted once on the candidate cell and/or calculates a counter of the number of times of transmission of the random access preamble on the candidate cell, such as increasing *PREAMBLE_TRANSMISSION_COUNTER* by 1;
if the terminal equipment transmits the random access preamble for N times on the candidate cell or the counter reaches the preset value N, the terminal equipment deems that the random access procedure on the candidate cell is completed;
otherwise, or if the random access procedure is not completed, the terminal equipment executes the random access resource selection procedure.

Example 3: for a case where the terminal equipment transmits multiple random access preambles on the candidate cell.

Example 3.1: for a case where power ramping does not exist (is suspended).

When the terminal equipment transmits N random access preambles on the candidate cell, the terminal equipment deems that the random access procedure on the candidate cell is completed, including that:
the terminal equipment determines a next available PRACH occasion corresponding to the selected DL RS, and performs the random access preamble transmission procedure.

For example, the random access preamble transmission procedure includes:

selecting a value of *DELTA _PREAMBLE;*
setting *PREAMBLE_RECEIVED_TARGET_POWER,* such as setting to *preambleReceivedTargetPower + DELTA_PREAMBLE + POWER_OFFSET_2STEP_RA;*
instructing a physical layer to transmit the random access preambles by using the selected PRACH occasion, *PREAMBLE_INDEX* and *PREAMBLE_RECEIVED_TARGET_POWER.*

If an LBT failure indication of the random access preamble transmission is received from the lower layer,

if *lbt-FailureRecoveryConfig* is configured, the terminal equipment executes a random access resource selection procedure;
otherwise,
if the transmitted random access preamble is different from the preamble in the previous random access preamble transmission, the terminal equipment deems that one random access preamble is transmitted on the candidate cell and/or calculates a counter of the number of random access preambles transmitted on the candidate cell, such as increasing a first counter by 1;
if the terminal equipment transmits N random access preambles on the candidate cell or the counter reaches the preset value N, the terminal equipment deems that the random access procedure on the candidate cell is completed;
otherwise, or if the random access procedure is not completed, the terminal equipment executes a random access resource selection procedure.

Example 3.2: for the case where power ramping exists (is performed)

When the terminal equipment transmits N random access preambles on the candidate cell, the terminal equipment deems that the random access procedure on the candidate cell is completed, including that:
the terminal equipment determines the next available PRACH occasion to which the selected DLRS corresponds, and performs the random access preamble transmission procedure.

For example, the random access preamble transmission procedure includes:

if a random access preamble is transmitted on the candidate cell or a counter of the number of times of transmission of the random access preamble on the candidate cell is calculated, for example, *PREAMBLE_TRANSMISSION_COUNTER* is greater than 1, and if no notification for suspending a power ramping counter of the lower layer is received, no LBT failure indication for last time of random access preamble transmission is received from the lower layer, and if a selected SSB or CHI-RS does not change from that selected in the last time of random access preamble transmission, increasing *PREAMBLE_POWER_RAMPING_COUNTER* by 1;
selecting a value of *DELTA _PREAMBLE;*

setting *PREAMBLE_RECEIVED_TARGET_POWER,* such as setting to *preambleReceivedTargetPower + DELTA_PREAMBLE + (PREAMBLE_POWER_RAMPING_COUNTER - 1) × PREAMBLE_POWER_RAMPING_-STEP + POWER_OFFSET_2STEP_RA;*

instructing a physical layer to transmit the random access preambles by using the selected PRACH occasion,

*PREAMBLE_INDEX* and PREAMBLE_RECEIVED_TARGET_POWER.

If an LBT failure indication of the random access preamble transmission is received from the lower layer,

if *lbt-FailureRecoveryConfig* is configured, the terminal equipment executes a random access resource selection procedure;

otherwise,

if the transmitted random access preamble is different from the preamble in the previous random access preamble transmission, the terminal equipment deems that one random access preamble is transmitted on the candidate cell and/or calculates a counter of the number of random access preambles transmitted on the candidate cell, such as increasing a first counter by 1;

if the terminal equipment transmits random access preambles for N times on the candidate cell or the counter reaches the preset value N, the terminal equipment deems that the random access procedure on the candidate cell is completed;

otherwise, or if the random access procedure is not completed, the terminal equipment executes a random access resource selection procedure.

In the embodiments of this disclosure, in step 701, the when a terminal equipment receives a PDCCH transmission in a search space or a control resource set related to the candidate cell, determining that a random access procedure on the candidate cell is completed, includes: in a case where a network configures or indicates the terminal equipment to receive the PDCCH transmission, when the terminal equipment receives the PDCCH transmission in the search space or control resource set related to the candidate cell, determining that a random access procedure on the candidate cell is completed.

In the embodiments of this disclosure, the network device configures via an RRC message and/or indicates via a PDCCH order or DCI the terminal equipment to receive the PDCCH transmission.

In the embodiments of this disclosure, the search space or the control resource set is associated with one or more candidate cells.

For example, the search space is associated with a candidate cell, or the control resource set is associated with a candidate cell.

In the embodiments of this disclosure, that the control resource set is associated with one or more candidate cells includes that a control resource set pool associated with the control resource set is associated with one or more candidate cells.

In the embodiments of this disclosure, the search space includes a cell-specific search space and/or a terminal-equipment-specific search space.

In the embodiments of this disclosure, the PDCCH transmission is an indication on successful transmission or reception, or is DCI scheduling an RAR.

In the embodiments of this disclosure, in step 702, the when the terminal equipment receives a random access response, determining that a random access procedure on the candidate cell is completed, includes: in a case where a network configures or indicates the terminal equipment to receive a random access response, when the terminal equipment receives a random access response, determining that a random access procedure on the candidate cell is completed.

In the embodiments of this disclosure, the random access response is a random access response transmitted by the candidate cell, that is, the random access response is a random access response transmitted by the candidate cell from the candidate cell;

or, the random access response is a random access response transmitted by a serving cell or a source cell.

In the embodiments of this disclosure, the random access response includes a timing advance (TA) value of the terminal equipment on the candidate cell.

Thus, the network device may provide the terminal equipment with a TA value of the candidate cell via an RAR.

For the case where the random access response is a random access response transmitted by the candidate cell, FIG. 9 is another schematic diagram of the random access method of embodiment 1 of this disclosure. As shown in FIG. 9, the method further includes:

step 901: transmitting a random access preamble on the candidate cell by the terminal equipment to the network device; and/or,

step 902: receiving, by the terminal equipment, a PDCCH transmitted by the network device on the serving cell or source cell or candidate cell to schedule a PDSCH of the candidate cell; and

step 903: when the terminal equipment receives a random access response included in or carried by the PDSCH of the candidate cell, determining that a random access procedure on the candidate cell is completed.

In the embodiments of this disclosure, step 903 is identical to step 702, step 901 and step 902 are optional, and step 901 and step 902 may not be executed, or at least one of step 901 and step 902 may be executed.

In the embodiments of this disclosure, the network device configures via the RRC message and/or indicates via the PDCCH order or DCI the terminal equipment to receive the random access response, and/or scheduling information of the random access response is included in the PDCCH from the serving cell or source cell or candidate cell.

In the embodiments of this disclosure, that a random access procedure on the candidate cell is completed includes that: a random access procedure is successfully completed, or, a random access procedure is not successfully completed.

In the embodiments of this disclosure, for the case where the random access procedure is not completed successfully, a random access problem is not indicated to a higher layer, and/or, failure information is not transmitted to the network, or failure information is not included in variable of failure information.

In the embodiments of this disclosure, as shown in FIG. 7, the method further includes:

step 703: switching an active uplink BWP by the terminal equipment to an uplink BWP of a serving cell before performing a random access procedure on the candidate cell or an initial BWP of the serving cell when the random access procedure is completed or within a preset time after the random access procedure is completed.

It can be seen from the above embodiment that when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell.

And furthermore, the network device is able to provide a TA value of the candidate cell to the terminal equipment via an RAR.

Embodiment 2

The embodiment of this disclosure provides a random access method, applicable to a network device, such as the network device 101 in FIG. 5. The method in embodiment 2 corresponds to the method in embodiment 1, and reference may be made to embodiment 1 for identical or corresponding contents.

FIG. 10 is a schematic diagram of the random access method of embodiment 2 of this disclosure. As shown in FIG. 10, the method includes:

step 1001: receiving, by the network device, a random access preamble transmitted by a terminal equipment on a candidate cell; and/or, transmitting a PDCCH transmission in a search space or a control resource set (coreset) related to the candidate cell by the network device to the terminal equipment; and/or,

step 1002: transmitting a random access response related to the candidate cell by the network device to the terminal equipment.

In the embodiments of this disclosure, on the candidate cell, the network device receives the random access preamble transmitted by the terminal equipment, and/or, the network device transmits the PDCCH transmission in the search space or the control resource set (coreset) related to the candidate cell to the terminal equipment for the terminal equipment to determine that the random access procedure on the candidate cell is completed.

In the embodiments of this disclosure, the network device transmits a random access response related to the candidate cell to the terminal equipment for the terminal equipment to determine that the random access procedure on the candidate cell is completed.

In the embodiments of this disclosure, at least one of step 1001 and step 1002 may be executed.

In the embodiments of this disclosure, the search space or the control resource set is associated with one or more candidate cells.

In the embodiments of this disclosure, the search space is associated with a candidate cell, or,

the control resource set is associated with a candidate cell.

In the embodiments of this disclosure, that the control resource set is associated with one or more candidate cells includes that a control resource set pool associated with the control resource set is associated with one or more candidate cells.

In the embodiments of this disclosure, the search space includes a cell-specific search space and/or a terminal-equipment-specific search space.

In the embodiments of this disclosure, the PDCCH transmission is an indication on successful transmission or reception, or is DCI scheduling an RAR.

In the embodiments of this disclosure, that the network device transmits a random access response to the terminal equipment further includes that:
the network device configures or indicates the terminal equipment to receive a random access response.

In the embodiments of this disclosure, the random access response is a random access response transmitted by a candidate cell, or,
the random access response is a random access response transmitted by a serving cell or a source cell.

In the embodiments of this disclosure, the random access response includes a timing advance (TA) value of the terminal equipment on the candidate cell.

In the embodiments of this disclosure, that the random access response is a random access response transmitted by the candidate cell from the candidate cell further includes that:

the network device receives the random access preamble transmitted by the terminal equipment on the candidate cell; and/or,
the network device transmits a PDCCH to the terminal equipment on the serving cell or the source cell or the candidate cell to schedule PDSCHs of the candidate cell.

In the embodiments of this disclosure, that the network device receives the random access preamble transmitted by the terminal equipment on the candidate cell includes that:
the network device receives the random access preamble transmitted by the terminal equipment on the candidate cell, and determines the timing advance value of the terminal equipment.

In the embodiments of this disclosure, that the network device configures or indicates the terminal equipment to receive a random access response includes that:

the network device configures via an RRC message and/or indicates via a PDCCH order or DCI the terminal equipment to receive the PDCCH transmission, and/or,
scheduling information of the random access response is included in the PDCCH from the serving cell or the source cell or the candidate cell.

In the embodiments of this disclosure, the network device includes a first network device DU and/or a second network device DU.

For example, for an inter-gNB-DU cell change, the network device includes a first network device DU and a second network device DU, and the first network device DU and the second network device DU are different gNB-DUs in the same gNB-CU. For example, the first network device DU is a source gNB-DU (serving gNB-DU), and the second network device DU is a candidate gNB-DU (target candidate gNB-DU).

In this case, the candidate cell belongs to the second network device DU, such as a candidate gNB-DU (target candidate gNB-DU), and the serving cell belongs to the first network device DU, such as a source gNB-DU (serving gNB-DU).

For example, for an intra-gNB-DU cell change, the network device includes a network device DU, such as a first network device DU.

In this case, both the candidate cell and the serving cell belong to the first network device DU.

It can be seen from the above embodiment that when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell.

And furthermore, the network device is able to provide a TA value of the candidate cell to the terminal equipment via an RAR.

Embodiment 3

The embodiment of this disclosure provides a random access method, applicable to a network device, such as the network device 101 in FIG. 5.

FIG. 11 is a schematic diagram of the random access method of embodiment 3 of this disclosure, which is applicable to a network device. As shown in FIG. 11, the method includes:
step 1101: transmitting a random access response (RAR) related to a candidate cell by the network device to a terminal equipment.

In the embodiments of this disclosure, the random access response includes a timing advance (TA) value(s) of one or more candidate cells.

In the embodiments of this disclosure, the random access response is used by the terminal equipment to determine that a random access procedure on the candidate cell is completed.

Hence, the terminal may determine that the random access procedure on the candidate cell is completed, thereby avoiding effects on transmission on a serving cell. In addition, the network device may provide the terminal equipment with the TA value of the candidate cell via the RAR.

In the embodiments of this disclosure, the random access response is a random access response transmitted by the candidate cell.

In the embodiments of this disclosure, as shown in FIG. 11, the method further includes:

step 1102: receiving, by the network device, a random access preamble transmitted by the terminal equipment on the candidate cell; and/or,
step 1103: transmitting a PDCCH by the network device to the terminal equipment on a serving cell or a source cell or the candidate cell to schedule a PDSCH of the candidate cell.

In the embodiments of this disclosure, step 1102 and step 1103 are optional, and step 1102 and step 1103 may not be executed, or at least one of step 1102 and step 1103 may be executed.

In the embodiments of this disclosure, the receiving, by the network device, a random access preamble transmitted by the terminal equipment on the candidate cell, includes: receiving the random access preamble transmitted by the terminal equipment on the candidate cell, and determining a timing advance value of the terminal equipment on the candidate cell, by the network device.

In the embodiments of this disclosure, the network device configures via an RRC message and/or indicates via a PDCCH order or DCI the terminal equipment to receive the random access response, and/or, scheduling information of the random access response is included in a PDCCH from a serving cell or a source cell or the candidate cell.

In the embodiments of this disclosure, the network device includes a first network device DU and/or a second network device DU.

For example, for an inter-gNB-DU cell change, the network device includes a first network device DU and a second network device DU, and the first network device DU and the second network device DU are different gNB-DUs in the same gNB-CU. For example, the first network device DU is a source gNB-DU (serving gNB-DU), and the second network device DU is a candidate gNB-DU (target candidate gNB-DU).

In this case, the candidate cell belongs to the second network device DU, such as a candidate gNB-DU (target candidate gNB-DU), and the serving cell belongs to the first network device DU, such as a source gNB-DU (serving gNB-DU).

For example, for an intra-gNB-DU cell change, the network device includes a network device DU, such as a first network device DU.

In this case, both the candidate cell and the serving cell belong to the first network device DU.

It can be seen from the above embodiment that the terminal may determine that the random access procedure on the candidate cell is completed, thereby avoiding effect on transmission on the serving cell. In addition, the network device may provide the terminal equipment with the TA value of the candidate cell via the RAR.

Embodiment 4

The embodiment of this disclosure provides a random access apparatus, provided in a terminal equipment. As a principle of the apparatus for solving problems is similar to that of the method in embodiment 1, reference may be made to the implementation of the method described in the embodiment of the first aspect for implementation of the apparatus, with identical contents being not going to be described herein any further.

FIG. 12 is a schematic diagram of the random access device in embodiment 4 of this disclosure. As shown in FIG. 12, an apparatus 1200 includes:

a first determining unit 1201 configured to, when a terminal equipment transmits a random access preamble on a candidate cell, and/or when the terminal equipment receives a PDCCH transmission in a search space or a control resource set (coreset) related to the candidate cell, determine that a random access procedure on the candidate cell is completed; or
a second determining unit 1202 configured to, when the terminal equipment receives a random access response, determine that a random access procedure on the candidate cell is completed.

In the embodiments of this disclosure, that when a terminal equipment transmits a random access preamble on a candidate cell, determine that a random access procedure on the candidate cell is completed, includes:
when the terminal equipment transmits a random access preamble or transmits a random access preamble once on the candidate cell, determining that a random access procedure on the candidate cell is completed.

In the embodiments of this disclosure, the when the terminal equipment transmits a random access preamble or transmits a random access preamble once on the candidate cell, determining that a random access procedure on the candidate cell is completed, includes:
when the terminal equipment transmits a random access preamble once on a determined physical random access channel (PRACH) occasion of the candidate cell, determining that a random access procedure on the candidate cell is completed.

In the embodiments of this disclosure, the when the terminal equipment transmits a random access preamble on the candidate cell, determining that a random access procedure on the candidate cell is completed, includes:
when the terminal equipment transmits the random access preambles for a preset number of times or of a preset number on the candidate cell, determining that a random access procedure on the candidate cell is completed, wherein the preset number of times is greater than 1, and the preset number is greater than or equal to 1.

In the embodiments of this disclosure, the when the terminal equipment transmits the random access preambles for a preset number of times or of a preset number on the candidate cell, determining that a random access procedure on the candidate cell is completed, includes:

when the terminal equipment transmits a random access preamble on a determined physical random access channel (PRACH) occasion of the candidate cell,
determining by the terminal equipment whether the number of times transmitting the random access preamble reaches the preset number of times, or determining by the terminal equipment whether the number of transmitted random access preambles reaches the preset number.

In the embodiments of this disclosure, as shown in FIG. 12, the apparatus further includes:
a first handover unit 1203 configured to switch an active uplink BWP to an uplink BWP of a serving cell before performing a random access procedure on the candidate cell when the terminal equipment determines that a number of times of transmitting the random access preambles does not reach the preset number of times, or when the terminal equipment determines that a number of transmitted random access preambles does not reach the preset number.

In the embodiments of this disclosure, as shown in FIG. 12, the apparatus further includes:

a third determining unit 1204 configured to determine a next available PRACH occasion; and
a first transmitting unit 1205 configured to transmit the random access preamble on the determined PRACH occasion, until the number of times of transmitting the random access preambles reaches the preset number of times or the number of transmitted random access preambles reaches the preset number.

In the embodiments of this disclosure, the random access preamble transmitted on the determined PRACH occasion is identical to or different from the preamble transmitted last time.

In the embodiments of this disclosure, the preset number of times is a parameter configured or indicated by the network, and/or
the preset number is a parameter configured or indicated by the network.

In the embodiments of this disclosure, power ramping is suspended, or,
whether to perform or suspend power ramping is determined based on network configuration or indication.

In the embodiments of this disclosure, an RAR window is not started or is not configured.

In the embodiments of this disclosure, that when the terminal equipment receives a PDCCH transmission in a search space or a control resource set related to the candidate cell, determine that a random access procedure on the candidate cell is completed, includes:
in a case where a network configures or indicates the terminal equipment to receive the PDCCH transmission, when the terminal equipment receives the PDCCH transmission in the search space or control resource set related to the candidate cell, determining that a random access procedure on the candidate cell is completed.

In the embodiments of this disclosure, the network device configures via an RRC message and/or indicates via a PDCCH order or DCI the terminal equipment to receive the random access response.

In the embodiments of this disclosure, the search space or control resource set is associated with one or more candidate cells.

In the embodiments of this disclosure, the search space is associated with one candidate cell, or, the control resource set is associated with one candidate cell.

In the embodiments of this disclosure, that the control resource set is associated with one or more candidate cells includes that a control resource set pool associated with the control resource set is associated with one or more candidate cells.

In the embodiments of this disclosure, the search space includes a cell-specific search space and/or a terminal-equipment-specific search space.

In the embodiments of this disclosure, the PDCCH transmission is an indication on successful transmission or reception, or is DCI scheduling an RAR.

In the embodiments of this disclosure, that when the terminal equipment receives a random access response, determine that a random access procedure on the candidate cell is completed, includes:

in a case where a network configures or indicates the terminal equipment to receive a random access response, when the terminal equipment receives a random access response, determining that a random access procedure on the candidate cell is completed.

In the embodiments of this disclosure, the random access response is a random access response transmitted by the candidate cell, or,

the random access response is a random access response transmitted by the serving cell or the source cell.

In the embodiments of this disclosure, the random access response includes a timing advance (TA) value of the terminal equipment on the candidate cell.

In the embodiments of this disclosure, for the case where the random access response is a random access response transmitted by the candidate cell, the apparatus further includes:

transmitting a random access preamble on the candidate cell by the terminal equipment to the network device; and/or, receiving, by the terminal equipment, a PDCCH transmitted by the network device on the serving cell or source cell or candidate cell to schedule a PDSCH of the candidate cell.

In the embodiments of this disclosure, the network device configures via an RRC message and/or indicates via a PDCCH order or DCI the terminal equipment to receive the random access response.

Scheduling information of the random access response is included in a PDCCH from a serving cell or a source cell or the candidate cell.

In the embodiments of this disclosure, that a random access procedure on the candidate cell is completed includes:

that a random access procedure is successfully completed, or,
that a random access procedure is not successfully completed.

In the embodiments of this disclosure, for the case where the random access procedure is not completed successfully, a random access problem is not indicated to a higher layer, and/or, failure information is not transmitted to the network, or failure information is not included in variable of failure information.

In the embodiments of this disclosure, as shown in FIG. 12, the apparatus further includes:

a second handover unit 1206 configured to switch an active uplink BWP to an uplink BWP of a serving cell before performing a random access procedure on the candidate cell or an initial BWP of the serving cell when the random access procedure is completed or within a preset time after the random access procedure is completed.

In the embodiments of this disclosure, units 1203-1206 are optional.

In the embodiments of this disclosure, reference may be made to relevant steps in embodiment 1 for functions of the units, which shall not be repeated herein any further.

It can be seen from the above embodiment that when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell.

And furthermore, the network device is able to provide a TA value of the candidate cell to the terminal equipment via an RAR.

Embodiment 5

The embodiment of this disclosure provides a random access apparatus, provided in a network device. As a principle of the apparatus for solving problems is similar to that of the method in embodiment 2, reference may be made to the implementation of the method described in embodiment 2 for implementation of the apparatus, with identical contents being not going to be described herein any further.

FIG. 13 is a schematic diagram of the random access device in embodiment 5 of this disclosure. As shown in FIG. 13, an apparatus 1300 includes:

a first receiving unit 1301 configured to receive a random access preamble transmitted by a terminal equipment on a candidate cell; and/or, a second transmitting unit 1302 configured to transmit a PDCCH transmission in a search space or a control resource set (coreset) related to the candidate cell to a terminal equipment; and/or, a third transmitting unit 1303 configured to transmit a random access response related to the candidate cell to the terminal equipment.

In the embodiments of this disclosure, the search space or the control resource set is associated with one or more candidate cells.

In the embodiments of this disclosure, the search space is associated with one candidate cell, or,

the control resource set is associated with one candidate cell.

In the embodiments of this disclosure, that the control resource set is associated with one or more candidate cells includes that a control resource set pool associated with the control resource set is associated with one or more candidate cells.

In the embodiments of this disclosure, the search space includes a cell-specific search space and/or a terminal-equipment-specific search space.

In the embodiments of this disclosure, the PDCCH transmission is an indication on successful transmission or reception, or is DCI scheduling an RAR.

In the embodiments of this disclosure, the third transmitting unit 1303 is further configured to:

the network configures or indicates the terminal equipment to receive a random access response.

In the embodiments of this disclosure, the random access response is a random access response transmitted by the candidate cell, or,

the random access response is a random access response transmitted by the serving cell or the source cell.

In the embodiments of this disclosure, the random access response includes a timing advance (TA) value of the terminal equipment on the candidate cell.

In the embodiments of this disclosure, that the random access response is a random access response transmitted by the candidate cell further includes:

receiving, by the network device, a random access preamble transmitted by the terminal equipment on the candidate cell; and/or,
transmitting a PDCCH by the network device to the terminal equipment on the serving cell or source cell or candidate cell to schedule a PDSCH of the candidate cell.

In the embodiments of this disclosure, the receiving, by the network device, a random access preamble transmitted by the terminal equipment on the candidate cell, includes:

receiving the random access preamble transmitted by the terminal equipment on the candidate cell, and determining a timing advance value of the terminal equipment, by the network device.

In the embodiments of this disclosure, that the network device configures or indicates the terminal equipment to receive a random access response includes that:

the network device configures via an RRC message and/or indicates via a PDCCH order or DCI the terminal equipment to receive the random access response.

Scheduling information of the random access response is included in a PDCCH from a serving cell or a source cell or the candidate cell.

In the embodiments of this disclosure, the network device includes a first network device DU and/or a second network device DU.

In the embodiments of this disclosure, reference may be made to relevant steps in embodiment 1 and embodiment 2 for functions of the units, which shall not be repeated herein any further.

It can be seen from the above embodiment that when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell.

And furthermore, the network device is able to provide a TA value of the candidate cell to the terminal equipment via an RAR.

Embodiment 6

The embodiment of this disclosure provides a random access apparatus, provided in a network device. As a principle of the apparatus for solving problems is similar to that of the method in embodiment 3, reference may be made to the implementation of the method described in embodiment 3 for implementation of the apparatus, with identical contents being not going to be described herein any further.

FIG. 14 is a schematic diagram of the random access device in embodiment 5 of this disclosure. As shown in FIG. 14, an apparatus 1400 includes:

a fourth transmitting unit 1401 configured to transmit a random access response (RAR) related to a candidate cell to a terminal equipment.

In the embodiments of this disclosure, the random access response includes a timing advance (TA) value(s) of one or more candidate cells.

In the embodiments of this disclosure, the random access response is used by the terminal equipment to determine that a random access procedure on the candidate cell is completed.

In the embodiments of this disclosure, the random access response is a random access response transmitted by the candidate cell.

In the embodiments of this disclosure, as shown in FIG. 14, the apparatus further includes:

a second receiving unit 1402 configured to receive a random access preamble transmitted by the terminal equipment on the candidate cell; and/or,

a fifth transmitting unit 1403 configured to transmit a PDCCH to the terminal equipment on a serving cell or a source cell or the candidate cell to schedule a PDSCH of the candidate cell.

In the embodiments of this disclosure, the second receiving unit 1402 is configured to: receive the random access preamble transmitted by the terminal equipment on the candidate cell, and determine a timing advance value of the terminal equipment on the candidate cell, by the network device.

In the embodiments of this disclosure, the network device configures via an RRC message and/or indicates via a PDCCH order or DCI the terminal equipment to receive the random access response, and/or,

scheduling information of the random access response is included in a PDCCH from a serving cell or a source cell or the candidate cell.

In the embodiments of this disclosure, the network device includes a first network device DU and/or a second network device DU.

In the embodiments of this disclosure, the units 1402-1403 are optional.

In the embodiments of this disclosure, reference may be made to relevant steps in embodiment 3 for specific implementations of the above units, which shall not be repeated herein any further.

It can be seen from the above embodiment that the terminal may determine that the random access procedure on the candidate cell is completed, thereby avoiding effect on transmission on the serving cell. In addition, the network device may provide the terminal equipment with the TA value of the candidate cell via the RAR.

Embodiment 7

The embodiment of this disclosure provides a terminal equipment, including the random access apparatus described in embodiment 4.

FIG. 15 is a block diagram of a systematic structure of the terminal equipment of embodiment 7 of this disclosure. As shown in FIG. 15, a terminal equipment 1500 may include a processor 1510 and a memory 1520, the memory 1520 being coupled to the processor 1510. It should be noted that this figure is illustrative only, and other types of structures may also be used, so as to supplement or replace this structure and achieve a telecommunications function or other functions.

In one implementation, the functions of the random access apparatus may be integrated into the processor 1510.

In the embodiments of this disclosure, the processor 1510 is configured to: when a random access process on a candidate cell is initiated, for the candidate cell, an MAC entity of the terminal equipment switches an activated uplink BWP from a first uplink BWP to a second uplink BWP or a third uplink BWP or a fourth uplink BWP, the second uplink BWP being an initial uplink BWP of the candidate cell or a serving cell associated with the candidate cell, the third uplink BWP being an uplink BWP of the candidate cell configured with PRACH occasions, and the fourth uplink BWP being an uplink BWP of the candidate cell indicated by a PDCCH.

In another implementation, the random access apparatus and the processor 1510 may be configured separately; for example, the random access apparatus may be configured as a chip connected to the processor 1510, and the functions of the random access apparatus are executed under control of the processor 1510.

As shown in FIG. 15, the terminal equipment 1500 may further include a communication module 1530, an input unit 1540, a display 1550, and a power supply 1560. It should be noted that the terminal equipment 1500 does not necessarily include all the parts shown in FIG. 15. Furthermore, the terminal equipment 1500 may include parts not shown in FIG. 15, and the related art may be referred to.

As shown in FIG. 15, the processor 1510 is sometimes referred to as a controller or an operational control, which may include a microprocessor or other processor devices and/or logic devices. The processor 1510 receives input and controls operations of components of the terminal equipment 1500.

Wherein, the memory 1520 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1510 may execute programs stored in the memory 1520, so as to realize information storage or processing, etc. Functions of other parts are similar to those of the related art, which shall not be described herein any further.

It can be seen from the above embodiment that when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell.

And furthermore, the network device is able to provide a TA value of the candidate cell to the terminal equipment via an RAR.

Embodiment 8

The embodiment of this disclosure provides a network device, including the random access apparatus as described in embodiment 5 or 6.

FIG. 16 is a schematic diagram of a systematic structure of the network device of embodiment 8 of this disclosure. As shown in FIG. 16, a network device 1600 may include a processor 1610 and a memory 1620, the memory 1620 being coupled to the processor 1610. Wherein, the memory 1620 may store various data, and furthermore, it may store a program 1630 for data processing, and execute the program 1630 under control of the processor 1610, so as to receive various information transmitted by a terminal equipment, and transmit various information to the terminal equipment.

In one implementation, the functions of the random access apparatus may be integrated into the processor 1610.

Corresponding to embodiment 5, the processor 1610 may be configured to: receive a random access preamble transmitted by a terminal equipment on a candidate cell; and/or, transmit a PDCCH transmission in a search space or a control resource set (coreset) related to the candidate cell to a terminal equipment; and/or, transmit a random access response related to the candidate cell to the terminal equipment.

Corresponding to embodiment 6, the processor 1610 may be configured to: transmit a random access response (RAR) related to a candidate cell to a terminal equipment.

In another implementation, the random access apparatus and the processor 1610 may be configured separately; for example, the random access apparatus may be configured as a chip connected to the processor 1610, and the functions of the random access apparatus are executed under control of the processor 1610.

Furthermore, as shown in FIG. 16, the network device 1600 may include a transceiver 1640, and an antenna 1650, etc. Wherein, functions of the above components are similar to those in the related art, and shall not be described herein any further. It should be noted that the network device 1600 does not necessarily include all the parts shown in FIG. 16. Furthermore, the network device 1600 may include parts not shown in FIG. 16, and the related art may be referred to.

It can be seen from the above embodiment that when the terminal equipment transmits a random access preamble on a candidate cell, and/or when the terminal equipment receives a PDCCH transmission in a search space or a control resource set (coreset) related to the candidate cell, it is determined that a random access procedure on the candidate cell is completed; or, when the terminal equipment receives a random access response, it is determined that a random access procedure on the candidate cell is completed; hence, the terminal equipment is able to determine that a random access procedure on the candidate cell is completed, thereby avoiding effects on transmissions on the serving cell.

And furthermore, the network device is able to provide a TA value of the candidate cell to the terminal equipment via an RAR.

Embodiment 9

The embodiment of this disclosure provides a communication system, including the terminal equipment described in embodiment 7 and/or the network device described in embodiment 8, and reference may be made to embodiment 7 and embodiment 8 for specific contents.

For example, reference may be made to FIG. 5 for a structure of the communication system. As shown in FIG. 5, the communication system 100 includes the network device 101 and the terminal equipment 102. The terminal equipment 102 may be identical to the terminal equipment described in embodiment 7, and the network device 101 may be identical to the network device described in embodiment 8, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 12 may either correspond to software modules of procedures of a computer program, or correspond to hardware modules. Such software modules may respectively correspond to the steps shown in FIGs. 7, 8 and 9. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 12 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 12 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to the implementations including the above embodiments, following supplements are further disclosed.

Supplement I

1. A random access apparatus, including:

a first determining unit configured to, when a terminal equipment transmits a random access preamble on a candidate cell, and/or when the terminal equipment receives a PDCCH transmission in a search space or a control resource set (coreset) related to the candidate cell, determine that a random access procedure on the candidate cell is completed; or

a second determining unit configured to, when the terminal equipment receives a random access response, determine that a random access procedure on the candidate cell is completed.

2. The apparatus according to supplement 1, wherein that when a terminal equipment transmits a random access preamble on a candidate cell, determine that a random access procedure on the candidate cell is completed, includes: when the terminal equipment transmits a random access preamble or transmits a random access preamble once on the candidate cell, determining that a random access procedure on the candidate cell is completed.

3. The apparatus according to supplement 1 or 2, wherein that when a terminal equipment transmits a random access preamble on a candidate cell, determine that a random access procedure on the candidate cell is completed, includes: when the terminal equipment transmits a random access preamble once on a determined physical random access channel (PRACH) occasion of the candidate cell, determining that a random access procedure on the candidate cell is completed.

4. The apparatus according to supplement 1, wherein that when a terminal equipment transmits random access preambles on a candidate cell, determine that a random access procedure on the candidate cell is completed, includes:

when the terminal equipment transmits the random access preambles for a preset number of times or of a preset number on the candidate cell, determining that a random access procedure on the candidate cell is completed, wherein the preset number of times is greater than 1, and the preset number is greater than or equal to 1.

5. The apparatus according to supplement 4, wherein the when the terminal equipment transmits the random access preambles for a preset number of times or of a preset number on the candidate cell, determining that a random access procedure on the candidate cell is completed, includes that:

when the terminal equipment transmits a random access preamble on a determined physical random access channel (PRACH) occasion of the candidate cell,

the terminal equipment determines whether the number of times of transmitting the random access preamble reaches the preset number of times, or the terminal equipment determines whether the number of the random access preamble reaches the preset number.

6. The apparatus according to supplement 4 or 5, wherein the apparatus further includes:

a first handover unit configured to switch an active uplink BWP to an uplink BWP of a serving cell before performing the random access procedure on the candidate cell when the terminal equipment determines that a number of times of transmitting the random access preambles does not reach the preset number of times, or when the terminal equipment determines that a number of transmitted random access preambles does not reach the preset number.

7. The apparatus according to any one of supplements 4-6, wherein the apparatus further includes:

a third determining unit configured to determine a next available PRACH occasion; and

a first transmitting unit configured to transmit random access preambles on the determined PRACH occasion, until the number of times of transmitting the random access preambles reaches the preset number of times or the number of transmitted random access preambles reaches the preset number.

8. The apparatus according to any one of supplements 4-7, wherein,

the random access preamble transmitted on the determined PRACH occasion is identical to or different from the preamble transmitted last time.

9. The apparatus according to any one of supplements 4-8, wherein,

the preset number of times is a parameter configured or indicated by the network, and/or,

the preset number is a parameter configured or indicated by the network.

10. The apparatus according to supplement 7, wherein,

power ramping is suspended, or,

whether to perform or suspend power ramping is determined based on network configuration or indication.

11. The apparatus according to any one of supplements 1-10, wherein,

an RAR window is not started or is not configured.

12. The apparatus according to any one of supplements 1-11, wherein that when the terminal equipment receives a PDCCH transmission in a search space or a control resource set related to the candidate cell, determine that a random access procedure on the candidate cell is completed, includes:

in a case where a network configures or indicates the terminal equipment to receive the PDCCH transmission, when the terminal equipment receives the PDCCH transmission in the search space or control resource set related to the candidate cell, determining that a random access procedure on the candidate cell is completed.

13. The apparatus according to any one of supplements 1-12, wherein,

the network device configures via an RRC message and/or indicates via a PDCCH order or DCI the terminal equipment to receive the PDCCH transmission.

14. The apparatus according to any one of supplements 1-13, wherein,

the search space or control resource set is associated with one or more candidate cells.

15. The apparatus according to supplement 14, wherein,

the search space is associated with a candidate cell, or,
the control resource set is associated with a candidate cell.

16. The apparatus according to any one of supplements 1-15, wherein,
that the control resource set is associated with one or more candidate cells includes that a control resource set pool associated with the control resource set is associated with one or more candidate cells.
17. The apparatus according to any one of supplements 1-15, wherein,
the search space includes a cell-specific search space and/or a terminal-equipment-specific search space.
18. The apparatus according to any one of supplements 1-17, wherein,
the PDCCH transmission is an indication on successful transmission or reception, or is DCI scheduling an RAR.
19. The apparatus according to supplement 1, wherein that when the terminal equipment receives a random access response, determine that a random access procedure on the candidate cell is completed, includes:
in a case where a network device configures or indicates the terminal equipment to receive a random access response, when the terminal equipment receives a random access response, determining that a random access procedure on the candidate cell is completed.
20. The apparatus according to supplement 1 or 19, wherein,

the random access response is a random access response transmitted by the candidate cell; or,
the random access response is a random access response transmitted by a serving cell or a source cell.

21. The apparatus according to supplement 20, wherein,
the random access response includes a timing advance (TA) value of the terminal equipment on the candidate cell.
22. The apparatus according to supplement 20 or 21, wherein for the case where the random access response is a random access response transmitted by the candidate cell, the apparatus further includes:

transmitting a random access preamble on the candidate cell by the terminal equipment to the network device; and/or,
receiving, by the terminal equipment, a PDCCH transmitted by the network device on the serving cell or source cell or candidate cell to schedule a PDSCH of the candidate cell.

23. The apparatus according to any one of supplements 19-22, wherein,

the network device configures via an RRC message and/or indicates via a PDCCH order or DCI the terminal equipment to receive the PDCCH transmission, and/or,
scheduling information of the random access response is included in a PDCCH from a serving cell or a source cell or the candidate cell.

24. The apparatus according to any one of supplements 1-23, wherein that a random access procedure on the candidate cell is completed includes:

that a random access procedure is successfully completed, or,
that a random access procedure is not successfully completed.

25. The apparatus according to supplement 24, wherein,
for the case where the random access procedure is not completed successfully, a random access problem is not indicated to a higher layer, and/or, failure information is not transmitted to the network, or failure information is not included in variable of failure information.
26. The apparatus according to any one of supplements 1-25, wherein the apparatus further includes:
a second handover unit configured to switch an active uplink BWP to an uplink BWP of a serving cell before performing a random access procedure on the candidate cell or an initial BWP of the serving cell when the random access procedure is completed or within a preset time after the random access procedure is completed.
27. A random access apparatus, including:
a first receiving unit configured to receive a random access preamble transmitted by a terminal equipment on a candidate cell; and/or, a second transmitting unit configured to transmit a PDCCH transmission in a search space or a control resource set (coreset) related to the candidate cell to a terminal equipment; and/or, a third transmitting unit configured to transmit a random access response related to the candidate cell to the terminal equipment.
28. The apparatus according to supplement 27, wherein,
the search space or control resource set is associated with one or more candidate cells.

29. The apparatus according to supplement 28, wherein,

the search space is associated with a candidate cell, or,
the control resource set is associated with a candidate cell.

30. The apparatus according to any one of supplements 27-29, wherein,
that the control resource set is associated with one or more candidate cells includes that a control resource set pool associated with the control resource set is associated with one or more candidate cells.
31. The apparatus according to any one of supplements 27-29, wherein,
the search space includes a cell-specific search space and/or a terminal-equipment-specific search space.
32. The apparatus according to any one of supplements 27-31, wherein,
the PDCCH transmission is an indication on successful transmission or reception, or is DCI scheduling an RAR.
33. The apparatus according to supplement 27, wherein the third transmitting unit is further configured to:
configure or indicate the terminal equipment by the network device to receive a random access response.
34. The apparatus according to supplement 27 or 33, wherein,

the random access response is a random access response transmitted by the candidate cell, or,
the random access response is a random access response transmitted by a serving cell or a source cell.

35. The apparatus according to supplement 34, wherein,
the random access response includes a time advance (TA) value of the terminal equipment on the candidate cell.
36. The apparatus according to supplement 34 or 35, wherein that the random access response is a random access response from the candidate cell transmitted by the candidate cell further includes:

receiving, by the network device, a random access preamble transmitted by the terminal equipment on the candidate cell; and/or,
transmitting a PDCCH by the network device to the terminal equipment on the serving cell or the source cell, to schedule a PDSCH of the candidate cell.

37. The apparatus according to supplement 36, wherein the receiving, by the network device, a random access preamble transmitted by the terminal equipment on the candidate cell, includes:
receiving the random access preamble transmitted by the terminal equipment on the candidate cell, and determining a timing advance value of the terminal equipment on the candidate cell, by the network device.
38. The apparatus according to any one of supplements 33-37, wherein that configure or indicate the terminal equipment by the network device to receive a random access response includes:

that the network device configures via an RRC message and/or indicates via a PDCCH order or DCI the terminal equipment to receive the random access response, and/or,
that scheduling information of the random access response is included in a PDCCH from the serving cell, the source cell, or the candidate cell.

39. The apparatus according to any one of supplements 27-38, wherein,
the network device includes a first network device DU and/or a second network device DU.
40. A random access apparatus, including:
a fourth transmitting unit configured to transmit a random access response (RAR) related to a candidate cell to a terminal equipment.
41. The apparatus according to supplement 40, wherein,
the random access response includes a timing advance (TA) value(s) of one or more candidate cells.
42. The apparatus according to supplement 40 or 41, wherein,
the random access response is a random access response transmitted by the candidate cell.
43. The apparatus according to supplement 42, wherein the apparatus further includes:

a second receiving unit configured to receive a random access preamble transmitted by the terminal equipment on the candidate cell; and/or,
a fifth transmitting unit configured to transmit a PDCCH to the terminal equipment on a serving cell or a source cell or the candidate cell to schedule a PDSCH of the candidate cell.

44. The apparatus according to supplement 43, wherein the second receiving unit configured to:

receive the random access preamble transmitted by the terminal equipment on the candidate cell, and determine a timing advance value of the terminal equipment on the candidate cell, by the network device.

45. The apparatus according to any one of supplements 40-44, wherein,

the network device configures via an RRC message and/or indicates via a PDCCH order or DCI the terminal equipment to receive the random access response, and/or,

scheduling information of the random access response is included in a PDCCH from a serving cell or a source cell or the candidate cell.

46. The apparatus according to any one of supplements 40-45, wherein,

the network device includes a first network device DU and/or a second network device DU.

47. A terminal equipment, including the apparatus as described in any one of supplements 1-26.

48. A network device, including the apparatus as described in any one of supplements 27-46.

49. A communication system, including the terminal equipment as described in supplement 47 and/or the network device as described in supplement 48.

Supplement II

1. A random access method, including:

when a terminal equipment transmits a random access preamble on a candidate cell, and/or when the terminal equipment receives a PDCCH transmission in a search space or a control resource set (coreset) related to the candidate cell, determining that a random access procedure on the candidate cell is completed; or

when the terminal equipment receives a random access response, determining that a random access procedure on the candidate cell is completed.

2. The method according to supplement 1, wherein that when a terminal equipment transmits a random access preamble on a candidate cell, determine that a random access procedure on the candidate cell is completed, includes:

when the terminal equipment transmits a random access preamble or transmits a random access preamble once on the candidate cell, determining that a random access procedure on the candidate cell is completed.

3. The method according to supplement 1 or 2, wherein that when a terminal equipment transmits a random access preamble on a candidate cell, determine that a random access procedure on the candidate cell is completed, includes:

when the terminal equipment transmits a random access preamble once on a determined physical random access channel (PRACH) occasion of the candidate cell, determining that a random access procedure on the candidate cell is completed.

4. The method according to supplement 1, wherein that when a terminal equipment transmits random access preambles on a candidate cell, determine that a random access procedure on the candidate cell is completed, includes:

when the terminal equipment transmits the random access preambles for a preset number of times or of a preset number on the candidate cell, determining that a random access procedure on the candidate cell is completed, wherein the preset number of times is greater than 1, and the preset number is greater than or equal to 1.

5. The method according to supplement 4, wherein the when the terminal equipment transmits the random access preambles for a preset number of times or of a preset number on the candidate cell, determining that a random access procedure on the candidate cell is completed, includes that:

when the terminal equipment transmits a random access preamble on a determined physical random access channel (PRACH) occasion of the candidate cell,

the terminal equipment determines whether the number of times of transmitting the random access preamble reaches the preset number of times, or the terminal equipment determines whether the number of the random access preamble reaches the preset number.

6. The method according to supplement 4 or 5, wherein the method further includes:

switching an active uplink BWP to an uplink BWP of a serving cell before performing a random access procedure on the candidate cell when the terminal equipment determines that a number of times of transmitting the random access preambles does not reach the preset number of times, or when the terminal equipment determines that a number of transmitted random access preambles does not reach the preset number.

7. The method according to any one of supplements 4-6, wherein the method further includes:

determining a next available PRACH occasion, and transmitting random access preambles on the determined PRACH occasion, by the terminal equipment, until the number of times of transmitting the random access preambles reaches the preset number of times or the number of transmitted random access preambles reaches the preset number.

8. The method according to any one of supplements 4-7, wherein,
the random access preamble transmitted on the determined PRACH occasion is identical to or different from the preamble transmitted last time.

9. The method according to any one of supplements 4-8, wherein,

the preset number of times is a parameter configured or indicated by the network, and/or,
the preset number is a parameter configured or indicated by the network.

10. The method according to supplement 7, wherein,

power ramping is suspended, or,
whether to perform or suspend power ramping is determined based on network configuration or indication.

11. The method according to any one of supplements 1-10, wherein,
an RAR window is not started or is not configured.

12. The method according to any one of supplements 1-11, wherein that when the terminal equipment receives a PDCCH transmission in a search space or a control resource set related to the candidate cell, determine that a random access procedure on the candidate cell is completed, includes:
in a case where a network configures or indicates the terminal equipment to receive the PDCCH transmission, when the terminal equipment receives the PDCCH transmission in the search space or control resource set related to the candidate cell, determining that a random access procedure on the candidate cell is completed.

13. The method according to any one of supplements 1-12, wherein,
the network device configures via an RRC message and/or indicates via a PDCCH order or DCI the terminal equipment to receive the PDCCH transmission.

14. The method according to any one of supplements 1-13, wherein,
the search space or control resource set is associated with one or more candidate cells.

15. The method according to supplement 14, wherein,

the search space is associated with a candidate cell, or,
the control resource set is associated with a candidate cell.

16. The method according to any one of supplements 1-15, wherein,
that the control resource set is associated with one or more candidate cells includes that a control resource set pool associated with the control resource set is associated with one or more candidate cells.

17. The method according to any one of supplements 1-15, wherein,
the search space includes a cell-specific search space and/or a terminal-equipment-specific search space.

18. The method according to any one of supplements 1-17, wherein,
the PDCCH transmission is an indication on successful transmission or reception, or is DCI scheduling an RAR.

19. The method according to supplement 1, wherein that when the terminal equipment receives a random access response, determine that a random access procedure on the candidate cell is completed, includes:
in a case where a network configures or indicates the terminal equipment to receive a random access response, when the terminal equipment receives a random access response, determining that a random access procedure on the candidate cell is completed.

20. The method according to supplement 1 or 19, wherein,

the random access response is a random access response transmitted by the candidate cell; or,
the random access response is a random access response transmitted by a serving cell or a source cell.

21. The method according to supplement 20, wherein,
the random access response includes a timing advance (TA) value of the terminal equipment on the candidate cell.

22. The method according to supplement 20 or 21, wherein for the case where the random access response is a random access response transmitted by the candidate cell, the method further includes:

transmitting a random access preamble on the candidate cell by the terminal equipment to the network device; and/or,

receiving, by the terminal equipment, a PDCCH transmitted by the network device on the serving cell or source cell or candidate cell to schedule a PDSCH of the candidate cell.

23. The method according to any one of supplements 19-22, wherein,

the network device configures via an RRC message and/or indicates via a PDCCH order or DCI the terminal equipment to receive the PDCCH transmission, and/or,

scheduling information of the random access response is included in a PDCCH from a serving cell or a source cell or the candidate cell.

24. The method according to any one of supplements 1-23, wherein that a random access procedure on the candidate cell is completed includes:

that a random access procedure is successfully completed, or,

that a random access procedure is not successfully completed.

25. The method according to supplement 24, wherein,

for the case where the random access procedure is not completed successfully, a random access problem is not indicated to a higher layer, and/or, failure information is not transmitted to the network, or failure information is not included in variable of failure information.

26. The method according to any one of supplements 1-25, wherein the method further includes:

switching an active uplink BWP to an uplink BWP of a serving cell before performing a random access procedure on the candidate cell or an initial BWP of the serving cell when the random access procedure is completed or within a preset time after the random access procedure is completed.

27. A random access method, including:

receiving, by a network device, a random access preamble transmitted by a terminal equipment on a candidate cell; and/or, transmitting a PDCCH transmission in a search space or a control resource set (coreset) related to the candidate cell by the network device to the terminal equipment; and/or, transmitting a random access response related to the candidate cell by the network device to the terminal equipment.

28. The method according to supplement 27, wherein,

the search space or control resource set is associated with one or more candidate cells.

29. The method according to supplement 28, wherein,

the search space is associated with a candidate cell, or,

the control resource set is associated with a candidate cell.

30. The method according to any one of supplements 27-29, wherein,

that the control resource set is associated with one or more candidate cells includes that a control resource set pool associated with the control resource set is associated with one or more candidate cells.

31. The method according to any one of supplements 27-29, wherein,

the search space includes a cell-specific search space and/or a terminal-equipment-specific search space.

32. The method according to any one of supplements 27-31, wherein,

the PDCCH transmission is an indication on successful transmission or reception, or is DCI scheduling an RAR.

33. The method according to supplement 27, wherein that the network device transmits a random access response to the terminal equipment further includes:

configuring or indicating the terminal equipment by the network device to receive a random access response.

34. The method according to supplement 27 or 33, wherein,

the random access response is a random access response transmitted by the candidate cell, or,

the random access response is a random access response transmitted by a serving cell or a source cell.

35. The method according to supplement 34, wherein,

the random access response includes a time advance (TA) value of the terminal equipment on the candidate cell.

36. The method according to supplement 34 or 35, wherein that the random access response is a random access response from the candidate cell transmitted by the candidate cell further includes:

receiving, by the network device, a random access preamble transmitted by the terminal equipment on the candidate cell; and/or,

transmitting a PDCCH by the network device to the terminal equipment on the serving cell or the source cell, to schedule a PDSCH of the candidate cell.

37. The method according to supplement 36, wherein the receiving, by the network device, a random access preamble transmitted by the terminal equipment on the candidate cell, includes:

receiving the random access preamble transmitted by the terminal equipment on the candidate cell, and determining a timing advance value of the terminal equipment on the candidate cell, by the network device.

38. The method according to any one of supplements 33-37, wherein that configure or indicate the terminal equipment by the network device to receive a random access response includes:

that the network device configures via an RRC message and/or indicates via a PDCCH order or DCI the terminal equipment to receive the random access response, and/or,

that scheduling information of the random access response is included in a PDCCH from the serving cell, the source cell, or the candidate cell.

39. The method according to any one of supplements 27-38, wherein,

the network device includes a first network device DU and/or a second network device DU.

40. A random access method, including:

transmitting a random access response (RAR) related to a candidate cell by a network device to a terminal equipment.

41. The method according to supplement 40, wherein,

the random access response includes a timing advance (TA) value(s) of one or more candidate cells.

42. The method according to supplement 40 or 41, wherein,

the random access response is a random access response transmitted by the candidate cell.

43. The method according to supplement 42, wherein the method further includes:

receiving, by the network device, a random access preamble transmitted by the terminal equipment on the candidate cell; and/or,

transmitting a PDCCH, by the network device to the terminal equipment on a serving cell or a source cell or the candidate cell to schedule a PDSCH of the candidate cell.

44. The method according to supplement 43, wherein the receiving, by the network device, a random access preamble transmitted by the terminal equipment on the candidate cell, includes:

receiving the random access preamble transmitted by the terminal equipment on the candidate cell, and determining a timing advance value of the terminal equipment on the candidate cell, by the network device.

45. The method according to any one of supplements 40-44, wherein,

the network device configures via an RRC message and/or indicates via a PDCCH order or DCI the terminal equipment to receive the random access response, and/or,

scheduling information of the random access response is included in a PDCCH from a serving cell or a source cell or the candidate cell.

46. The method according to any one of supplements 40-45, wherein,

the network device includes a first network device DU and/or a second network device DU.

**Claims**

1. A random access apparatus, comprising:

a first determining unit configured to, when a terminal equipment transmits a random access preamble on a candidate cell, and/or when the terminal equipment receives a PDCCH transmission in a search space or a control resource set (coreset) related to the candidate cell, determine that a random access procedure on the candidate cell is completed; or

a second determining unit configured to, when the terminal equipment receives a random access response, determine that a random access procedure on the candidate cell is completed.

2. The apparatus according to claim 1, wherein that when a terminal equipment transmits a random access preamble on a candidate cell, determine that a random access procedure on the candidate cell is completed, comprises:
when the terminal equipment transmits a random access preamble once on a determined physical random access channel (PRACH) occasion of the candidate cell, determining that a random access procedure on the candidate cell is completed.

3. The apparatus according to claim 1, wherein that when a terminal equipment transmits random access preambles on a candidate cell, determine that a random access procedure on the candidate cell is completed, comprises:
when the terminal equipment transmits the random access preambles for a preset number of times or of a preset number on the candidate cell, determining that a random access procedure on the candidate cell is completed, wherein the preset number of times is greater than 1, and the preset number is greater than or equal to 1.

4. The apparatus according to claim 3, wherein the apparatus further comprises:
a first handover unit configured to switch an active uplink BWP to an uplink BWP of a serving cell before performing a random access procedure on the candidate cell when the terminal equipment determines that a number of times of transmitting the random access preambles does not reach the preset number of times, or when the terminal equipment determines that a number of transmitted random access preambles does not reach the preset number.

5. The apparatus according to claim 3, wherein,

power ramping is suspended, or,
whether to perform or suspend power ramping is determined based on network configuration or indication.

6. The apparatus according to claim 1, wherein,
an RAR window is not started or is not configured.

7. The apparatus according to claim 1, wherein that when the terminal equipment receives a PDCCH transmission in a search space or a control resource set related to the candidate cell, determine that a random access procedure on the candidate cell is completed, comprises:
in a case where a network configures or indicates the terminal equipment to receive the PDCCH transmission, when the terminal equipment receives the PDCCH transmission in the search space or control resource set related to the candidate cell, determining that a random access procedure on the candidate cell is completed.

8. The apparatus according to claim 1, wherein,
the search space or control resource set is associated with one or more candidate cells.

9. The apparatus according to claim 1, wherein,
that the control resource set is associated with one or more candidate cells comprises that a control resource set pool associated with the control resource set is associated with one or more candidate cells.

10. The apparatus according to claim 1, wherein,
the PDCCH transmission is an indication on successful transmission or reception, or is a DCI scheduling an RAR.

11. The apparatus according to claim 1, wherein that when the terminal equipment receives a random access response, determine that a random access procedure on the candidate cell is completed, comprises:
in a case where a network configures or indicates the terminal equipment to receive a random access response, when the terminal equipment receives a random access response, determining that a random access procedure on the candidate cell is completed.

12. The apparatus according to claim 1, wherein that a random access procedure on the candidate cell is completed comprises:

that a random access procedure is successfully completed, or,
that a random access procedure is not successfully completed.

13. The apparatus according to claim 1, wherein the apparatus further comprises:
a second handover unit configured to switch an active uplink BWP to an uplink BWP of a serving cell before performing a random access procedure on the candidate cell or an initial BWP of the serving cell when the random access procedure is completed or within a preset time after the random access procedure is completed.

14. A random access apparatus, comprising:

a first receiving unit configured to receive a random access preamble transmitted by a terminal equipment on a candidate cell; and/or,
a second transmitting unit configured to transmit a PDCCH transmissions in a search space or a control resource set (coreset) related to the candidate cell to a terminal equipment; and/or,
a third transmitting unit configured to transmit a random access response related to the candidate cell to the terminal equipment.

15. The apparatus according to claim 14, wherein the third transmitting unit is further configured to:
configure or indicate the terminal equipment by the network device to receive a random access response.

16. The apparatus according to claim 14, wherein,

the random access response is a random access response transmitted by the candidate cell, or,
the random access response is a random access response transmitted by a serving cell or a source cell.

17. The apparatus according to claim 16, wherein,
the random access response comprises a time advance (TA) value of the terminal equipment on the candidate cell.

18. The apparatus according to claim 16, wherein that the random access response is a random access response from the candidate cell transmitted by the candidate cell further comprises:

receiving, by the network device, a random access preamble transmitted by the terminal equipment on the candidate cell; and/or,
transmitting a PDCCH by the network device to the terminal equipment on the serving cell or the source cell, to schedule a PDSCH of the candidate cell.

19. The apparatus according to claim 15, wherein that configure or indicate the terminal equipment by the network device to receive a random access response comprises:

that the network device configures via an RRC message and/or indicates via a PDCCH order or DCI the terminal equipment to receive the random access response, and/or,
that scheduling information of the random access response is comprised in a PDCCH from the serving cell, the source cell, or the candidate cell.

20. A communication system, comprising a terminal equipment and/or a network device,

the terminal equipment comprising the apparatus as claimed in claim 1,
and the network device comprising the apparatus as claimed in claim 14.

FIG. 1

FIG. 2

| R | Timing Advance Command | | Oct 1 |
|---|---|---|---|
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |

**FIG. 3**

| UE Contention Resolution Identity | | | | Oct 1 |
|---|---|---|---|---|
| UE Contention Resolution Identity | | | | Oct 2 |
| UE Contention Resolution Identity | | | | Oct 3 |
| UE Contention Resolution Identity | | | | Oct 4 |
| UE Contention Resolution Identity | | | | Oct 5 |
| UE Contention Resolution Identity | | | | Oct 6 |
| R | Channel Access-CPext | TPC | HARQ Feedback Timing Indicator | Oct 7 |
| PUCCH Resource Indicator | | Timing Advance Command | | Oct 8 |
| Timing Advance Command | | | | Oct 9 |
| C-RNTI | | | | Oct 10 |
| C-RNTI | | | | Oct 11 |

**FIG. 4**

31

FIG. 5

FIG. 6

701

When a terminal equipment transmits a random access preamble on a candidate cell, and/or when the terminal equipment receives a PDCCH transmission in a search space or a control resource set (coreset) related to the candidate cell, determining that a random access procedure on the candidate cell is completed

702

When the terminal equipment receives a random access response, determining that a random access procedure on the candidate cell is completed

703

Switching an active uplink BWP by the terminal equipment to an uplink BWP of a serving cell before performing a random access procedure on the candidate cell or an initial BWP of the serving cell when the random access procedure is completed or within a preset time after the random access procedure is completed.

FIG. 7

801

When the terminal equipment transmits a random access preamble on the determined physical random access channel (PRACH) occasion of the candidate cell, determining by the terminal equipment whether the number of times of transmitting the random access preamble reaches the preset number of times, or determining by the terminal equipment whether the number of transmitted random access preambles reaches the preset number

802

When the terminal equipment determines that the number of times of transmitting the random access preambles has not reached the preset number, or when the terminal equipment determines that the number of transmitted random access preambles has not reached the preset number, switching an active uplink BWP to an uplink BWP of a serving cell by the terminal equipment before the random access procedure on the candidate cell is executed

803

Determining a next available PRACH occasion, and transmitting random access preambles on the determined PRACH occasion, by the terminal equipment, until the number of times of transmitting the random access preambles reaches the preset number of times or the number of transmitted random access preambles reaches the preset number

FIG. 8

901

Transmitting a random access preamble on the candidate cell by the terminal equipment to the network device

902

Receiving, by the terminal equipment, a PDCCH transmitted by the network device on the serving cell or source cell or candidate cell to schedule a PDSCH of the candidate cell

903

When the terminal equipment receives a random access response included in or carried by the PDSCH of the candidate cell, determining that a random access procedure on the candidate cell is completed

FIG. 9

1001

Receiving, by the network device, a random access preamble transmitted by a terminal equipment on a candidate cell; and/or, transmitting a PDCCH transmission in a search space or a control resource set (coreset) related to the candidate cell by the network device to the terminal equipment

1002

Transmitting a random access response related to the candidate cell by the network device to the terminal equipment

FIG. 10

1102

Receiving, by the network device, a random access preamble transmitted by the terminal equipment on the candidate cell

1103

Transmitting a PDCCH by the network device to the terminal equipment on a serving cell or a source cell or the candidate cell, so as to schedule a PDSCH of the candidate cell

1101

Transmitting a random access response (RAR) related to a candidate cell by the network device to a terminal equipment

FIG. 11

1200

1203

First handover
unit

1204

Third determining
unit

1205

First transmitting
unit

1201

First determining
unit

1202

Second determining
unit

1206

Second handover
unit

FIG. 12

1300

First receiving unit 1301

Second transmitting unit 1302

Third transmitting unit 1302

**FIG. 13**

1400

Second receiving unit 1402

Fifth transmitting unit 1403

Fourth transmitting unit 1401

**FIG. 14**

FIG. 15

FIG. 16

## INTERNATIONAL SEARCH REPORT

| International application No. |
| --- |
| **PCT/CN2023/076030** |

### A. CLASSIFICATION OF SUBJECT MATTER

H04W 74/08(2009.01)i

According to International Patent Classification (IPC) or to both national classification and IPC

### B. FIELDS SEARCHED

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CJFD, VEN, ENTXTC, EXTXT, WPABS, CNTXT, 3GPP: 候选 目标 小区 控制资源集合 搜索空间 随机接入 完成 响应 candidate target cell coreset RA RSR search space finish response

### C. DOCUMENTS CONSIDERED TO BE RELEVANT

| Category* | Citation of document, with indication, where appropriate, of the relevant passages | Relevant to claim No. |
| --- | --- | --- |
| Y | US 2021105674 A1 (SAMSUNG ELECTRONICS CO., LTD.) 08 April 2021 (2021-04-08) description, paragraphs 169-242 | 1-20 |
| Y | WO 2023014702 A2 (BEIJING XIAOMI MOBILE SOFTWARE CO., LTD.) 09 February 2023 (2023-02-09) description, paragraphs 169-173 | 1-20 |
| A | CN 109788580 A (SPREADTRUM COMMUNICATIONS (SHANGHAI) CO., LTD.) 21 May 2019 (2019-05-21) entire document | 1-20 |
| A | US 2020296635 A1 (OFINNO, L.L.C.) 17 September 2020 (2020-09-17) entire document | 1-20 |
| A | WO 2022056689 A1 (NOKIA SHANGHAI BELL CO., LTD. et al.) 24 March 2022 (2022-03-24) entire document | 1-20 |
| A | NOKIA et al. "PDCCH Search Spaces during Random Access" *3GPP TSG RAN WG1 Meeting #55 R1-084312*, 04 November 2008 (2008-11-04), pages 1-2 | 1-20 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 September 2023** | **22 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076030**

| Patent document cited in search report | | | Publication date (day/month/year) | Patent family member(s) | | | Publication date (day/month/year) |
|---|---|---|---|---|---|---|---|
| US | 2021105674 | A1 | 08 April 2021 | EP | 3987849 | A1 | 27 April 2022 |
| | | | | WO | 2021066466 | A1 | 08 April 2021 |
| | | | | KR | 20210039888 | A | 12 April 2021 |
| | | | | CN | 114514777 | A | 17 May 2022 |
| WO | 2023014702 | A2 | 09 February 2023 | | None | | |
| CN | 109788580 | A | 21 May 2019 | | None | | |
| US | 2020296635 | A1 | 17 September 2020 | US | 2022353758 | A1 | 03 November 2022 |
| WO | 2022056689 | A1 | 24 March 2022 | EP | 4214955 | A1 | 26 July 2023 |
| | | | | CN | 116114303 | A | 12 May 2023 |

Form PCT/ISA/210 (patent family annex) (July 2022)